# EUROPEAN PATENT APPLICATION

(11) **EP 3 021 412 A1**
(43) Date of publication of application: **18.05.2016**
(21) Application number: 15192042.8
(22) Date of filing: 29.10.2015
(51) Int. Cl.: H01M 8/124, H01M 4/88, H01M 8/00

(54) **SOLID OXID FUEL CELL MANUFACTURING METHOD AND DISPENSER APPARATUS FOR MANUFACTURING SAME**

(30) Priority: 12.11.2014 JP 2014229701; 12.11.2014 JP 2014229702; 12.11.2014 JP 2014229705; 13.05.2015 JP 2015098455; 13.05.2015 JP 2015098456
(71) Applicant: Toto Ltd., Fukuoka 802-8601 (JP)
(72) Inventor: FURUYA, Seiki, Kitakyushu-shi,, Fukuoka 8028601 (JP); ANDO, Shigeru, Kitakyushu-shi,, Fukuoka 8028601 (JP); MOMIYAMA, Yutaka, Kitakyushu-shi,, Fukuoka 8028601 (JP); HAYAMA, Kiyoshi, Kitakyushu-shi,, Fukuoka 8028601 (JP); OKAMOTO, Osamu, Kitakyushu-shi,, Fukuoka 8028601 (JP); WATANABE, Naoki, Kitakyushu-shi,, Fukuoka 8028601 (JP); ISAKA, Nobuo, Kitakyushu-shi,, Fukuoka 8028601 (JP); SATO, Masaki, Kitakyushu-shi,, Fukuoka 8028601 (JP); KAKINUMA, Yasuo, Kitakyushu-shi,, Fukuoka 8028601 (JP); TANAKA, Shuhei, Kitakyushu-shi,, Fukuoka 8028601 (JP); MURAKAMI, Hironobu, Kitakyushu-shi,, Fukuoka 8028601 (JP); HOSHIKO, Takuya, Kitakyushu-shi,, Fukuoka 8028601 (JP); KUBOTA, Masaru, Kitakyushu-shi,, Fukuoka 8028601 (JP); SHINOHARA, Shinji, Kitakyushu-shi,, Fukuoka 8028601 (JP)
(74) Representative: Witte, Weller & Partner Patentanwälte mbB

(57) **Abstract**

To provide a method of manufacturing a solid oxide fuel cell, capable of obtaining a uniform film thickness. The present invention is a method of manufacturing fuel cells (16), including a support body-forming step (S1) for forming a porous support body (97), a film deposition step for laminating functional layers constituting electricity generating elements on a support body; and a sintering step (S14, S16) for sintering the support body on which functional layers are formed; whereby the film deposition step includes surface deposition steps (S5, S11), in which a masking layer is formed in parts not requiring film deposition, and electricity generating elements first functional layers are simultaneously formed, and a dot deposition step (S15), in which slurry dots are formed by placing a slurry into a liquid droplet state and jetting it, and a second functional layer is formed by the agglomeration of these dots.

## Description

### Technical Field

0001 The present invention pertains to a method for manufacturing solid oxide fuel cells, and more particularly to a method for manufacturing a solid oxide fuel cell in which multiple electricity generating elements are formed on a porous support body and connected by an interconnector, and to a dispenser apparatus for said manufacturing.

### Background Art

0002 Solid oxide fuel cells (also referred to as "SOFCs" below) are fuel cells which operate at a relatively high temperature in which, using an oxide ion-conducting solid electrolyte as electrolyte, with electrodes attached to both sides thereof, fuel gas is supplied to one side thereof and oxidizer gas (air, oxygen, or the like) is supplied to the other side thereof.

0003 Japanese Published Unexamined Patent Application 2013-175305 (Patent Document 1) sets forth a method for manufacturing a solid oxide fuel cell. In the solid oxide fuel cell set forth in this reference, multiple electricity generating elements comprising a fuel electrode, a solid electrolyte film, and an air electrode are formed on a base tube, and these electricity generating elements are electrically connected by interconnectors. In this method for manufacturing a fuel cell, a fuel electrode is formed by a screen printing method, then a solid electrolyte film and an interconnector are formed by a screen printing method, on a base tube. A base tube on which each of such layers is formed is then co-sintered in atmosphere, following which an air electrode is formed on the sintered solid electrolyte film using a dispenser. I.e., a screen slurry, in which a powder of the material forming the air electrode is suspended, is sprayed onto the solid electrolyte film and the interconnector so that a film of slurry for the air electrode is deposited at the position where the air electrode is to be formed. Finally, the base tube on which the air electrode is formed is then sintered in atmosphere.

### Prior Art References

0004

### Patent Documents

### Patent Document 1

Japanese Published Unexamined Patent Application 2013-175305

### Summary of the Invention

### Problems to be Solved by the Present Invention

0005 However, in the manufacturing method for a solid oxide fuel cell set forth in Japanese Published Unexamined Patent Application 2013-175305, the problem arises that the film thickness of each layer such as the fuel electrode layer, etc. cannot be adequately controlled. I.e., when a fuel electrode layer is formed on a base tube by a screening method, a mask, from which the part to be used for forming the fuel electrode is cut out, is made to contact with the base tube; slurry for the fuel electrode is supplied thereon, and supplied slurry is coated onto the base tube by squeegee. However, if there is deflection of the cylindrical base tube, the spacing between the squeegee and the base tube will differ in each part of the base tube, making it difficult to obtain a uniform thickness of the applied slurry film. When the film thickness of formed fuel electrodes or the like is non-uniform, unevenness is created in gas transmissivity and ion transmissivity, reducing the performance of the constituted fuel cell elements.

0006 Also, because support bodies such as base tubes, etc. are generally porous bodies consisting of a baked molded body formed by extrusion molding or the like, it is difficult to form them with a high dimensional precision. The problem arises that when machining is performed on a support body in order to obtain dimensional precision in the support body, manufacturing cost rises extraordinarily.

### Means for Resolving Problems

0007 In order to resolve the above-described problems, the present invention is a method for manufacturing a solid oxide fuel cell in which multiple electricity generating elements are formed on a porous support body and the electricity generating elements are connected by an interconnector, the method comprising steps of: a support body-forming step for forming the porous support body; a film deposition step for laminating and forming, in a predetermined sequence, a fuel electrode layer, an electrolyte layer, and an air electrode layer, being functional layers constituting the multiple electricity generating elements, onto the porous support body; and a sintering step for heating and sintering the porous support body on which the functional layers are formed by the film deposition step; wherein the film deposition step includes: a surface deposition step in which masking layers are formed on parts not requiring the film deposition, and slurry for forming first functional layers of the functional layers is brought into contact from over the masking layers in order to simultaneously form the first functional layers of the multiple electricity generating elements in parts with no masking layers, and; a dot deposition step for forming slurry dots by turning slurry for forming second functional layers among the functional layers into liquid droplet form and continuously jetting the dots onto the area in which the second functional layers are to be formed, thereby forming the second functional layers by the agglomeration of the dots.

0008 In the present invention thus constituted, a porous support body is formed in a support body-forming step; functional layers constituting electricity generating elements are laminated in a film deposition step, and sintered in a sintering step. A surface deposition step for simultaneously forming multiple electricity generating element functional layers and a dot deposition step for forming functional layers by the agglomeration of dots are included in the film deposition step.

0009 A screen printing method in which a mask is applied to a support body and a slurry forming a functional layer is coated into openings in the mask using a squeegee is known as a film deposition method for forming each functional layer on a porous support body. Another known method is a dot film deposition method in which liquid droplets of slurry are jetted using a jet dispenser onto parts where film is to be deposited on a support body, and a functional layer is formed by the agglomeration of these liquid droplet dots.

0010 In general, however, there are errors in manufacturing the support body on which functional layers are formed, and it is difficult to obtain planarity and linearity in the surface serving as underlayment for film deposition. Therefore in the screen printing method in which slurry is coated on with a squeegee it is difficult to maintain a fixed gap between the underlayment surface on which film is deposited and the squeegee, making it unavoidable that the thickness of the deposited functional layer becomes non-uniform, and yields of manufactured fuel cells fall. Also, when machining is performed to increase the dimensional accuracy of the support body in order to raise yields, manufacturing costs rise extraordinarily. Furthermore, in recent years there has been a desire for compactification of fuel cells, but when electricity generating elements formed on fuel cells are reduced in size, the dimensional accuracy required of the functional layers formed by film deposition becomes even higher, making manufacturing difficult. I.e., because accurate positioning of each functional layer laminated in sequence on the support body is required in order to form multiple compact electricity generating elements on a support body, a high positional accuracy is required of each formed functional layer.

0011 On the other hand in the dot film deposition method, because film is deposited by jetting slurry in liquid droplet form, the formed functional layer is less influenced by the accuracy of the underlayment surface. In the film deposition method, however, the surface area on which film can be deposited per unit time is extremely small, and when all the functional layers are deposited by the dot film deposition method the time required for manufacturing becomes extremely prolonged. Also, if the viscosity of the jetted slurry is reduced in order to broaden the surface area over which film can be deposited per unit time, slurry penetrates into the porous support body, and the deposited film becomes uneven. Moreover, when slurry viscosity is low, dots must be repeatedly overlaid in the same parts in order to obtain sufficient layer thickness, thus having the converse effect of extending required film deposition time. When slurry penetrates into the support body, the size and positional accuracy of the formed layer decline. On the other hand when the viscosity of the jetted slurry is raised, traces of the dots formed of liquid droplets are left in the functional layer, and the flatness of the functional layer surface is reduced. When surface flatness declines, unevenness results in the electrical generation reaction occurring in each portion of the functional layers, and the electrical generation reaction becomes unstable due to current concentration, etc.

0012 Using the solid oxide fuel cell manufacturing method of the present invention constituted above, the film deposition step for forming functional layers includes both a surface deposition step for forming a masking layer in parts where no film deposition is required, and causing slurry to make contact in order to form functional layers from over this masking layer; and a dot deposition step for making slurry into liquid droplet form and forming slurry dots by continuous jetting, therefore fuel cells with stable performance can be manufactured in a short time even when there are manufacturing errors in the porous support body.

0013 In the present invention one kind of the functional layers formed adjacent to the porous support body is preferably formed by the surface deposition step, and the other kind of the functional layers formed by the dot deposition step is formed adjacent to the functional layer formed by the surface deposition step.

0014 In the invention thus constituted, a functional layer formed adjacent to the porous support body is formed by surface film deposition, therefore penetration of slurry into the porous support body and the resulting incidence of unevenness and prolonged manufacturing time, as occurs with dot film deposition, can be prevented. Also, surface film deposition forms a masking layer and brings slurry into contact from over the masking layer, therefore the surfaces of the functional layers can be smoothly formed without a direct adverse effect by the planarity or linearity, etc. of the porous support body on the thickness of the functional layer. Since a functional layer is formed by dot film deposition adjacent to a functional layer formed by surface film deposition, the positional accuracy of functional layers formed by dot film deposition can be increased, and pulling off or peeling of dots can be prevented.

0015 The present invention, furthermore, preferably comprises a first interconnector-forming step in which slurry dots are formed by making slurry into liquid droplet form and continuously jetting the slurry to form the interconnector so as to be connected to the functional layer formed adjacent to the porous support body, thus forming a first interconnector layer by the agglomeration of the dots.

0016 In the invention thus constituted, a first interconnector layer is formed by dot film deposition, therefore the first interconnector layer can be efficiently formed. I.e., because the surface area of the first interconnector layer is small compared to the functional layer, its implementation using surface film deposition results in more parts where masking is applied, thereby reducing manufacturing efficiency. In addition, a high positional accuracy is required of an interconnector layer providing electrical conductivity between given functional layers, but it is difficult to apply masking in such a way as to leave behind the minute parts requiring this type of positional accuracy. Positional accuracy can be improved by forming the first interconnector layer using dot film deposition.

0017 In the present invention an electrolyte layer is preferably formed by the surface deposition step, adjacent to the functional layer formed adjacent to the porous support body.

In the invention thus constituted, a functional layer adjacent to a porous support body and an electrolyte layer adjacent to the functional layer are formed by a surface deposition step, therefore no functional layer is formed on a functional layer resulting from low-smoothness dot film deposition, and no adverse effect is imparted to adjacently formed functional layers. Also, because the functional layer and electrolyte layer adjacent to the porous support body generally has a broad surface area, the surface area of the masking layer required for surface film deposition can be made small, and fuel cells can be efficiently manufactured.

0018 The present invention furthermore preferably comprises a second interconnector forming step wherein, following the surface deposition step for forming the electrolyte layer, a second interconnector layer, connected to the first interconnector layer formed in the first interconnector-forming step, is formed by agglomeration of the dots.

0019 In the invention thus constituted, the second interconnector connected to the first interconnector layer is formed by dot film deposition, therefore the second interconnector layer, which requires positional accuracy over a small surface area, can be efficiently manufactured.

0020 The present invention furthermore preferably comprises a provisional sintering step for heating and curing the electrolyte layer, wherein the provisional sintering step is performed following the surface deposition step for forming the electrolyte layer, and prior to the second interconnector-forming step.

In an electrolyte layer formed by surface film deposition, slurry has difficulty penetrating to the underlayment, and adhesion strength is lowered. In the invention thus constituted, a provisional sintering step is implemented after the electrolyte layer is surface film deposited, therefore adhesion strength is increased by a small amount of shrinkage, and peeling or cracking of the electrolyte layer can be prevented.

0021 In the present invention the surface deposition step is preferably carried out as a fuel electrode-forming step for simultaneously forming the multiple fuel electrode layers by causing slurry used to form the fuel electrode layer to adhere to the porous support body, and the porous support body is formed of an insulating material, with the multiple fuel electrode layers insulated from one another; wherein the first interconnector-forming step forms the interconnector so that it is connected to the fuel electrode layer; and further comprising an electrolyte layer-forming step for forming the electrolyte layers of the multiple electricity generating elements on the fuel electrode layers; wherein the dot deposition step is performed as an air electrode forming step for forming the air electrode layers in the multiple electricity generating elements by turning slurry used to form the air electrode layer into liquid droplet form, and continuously jetting it onto the electrolyte layer.

0022 In the invention thus constituted, slurry is adhered onto a porous support body in the fuel electrode layer-forming step, and the fuel electrode layers of multiple electricity generating elements are simultaneously formed by surface film deposition. Next, in an interconnector-forming step, an interconnector is formed in such a way as to connect with the fuel electrode layer. In addition, in the electrolyte layer-forming step the electrolyte layer of multiple electricity generating elements is formed on the fuel electrode layer and, in an air electrode-forming step, the air electrode layer of multiple electricity generating elements is formed on this electrolyte layer by the agglomeration of slurry dots.

0023 In the invention thus constituted, the fuel electrode layer formed immediately above the porous support body is formed by surface film deposition, and the interconnector and air electrode layer formed above that are formed by slurry dot agglomeration. Therefore because a bottom-most fuel electrode layer is formed by surface film deposition, a highly smooth fuel electrode layer can be formed, and adverse effects to the electrolyte layer, etc. on layers above that can be suppressed. I.e., the inventors discovered a new technical problem, namely that when a fuel electrode layer is formed by dot agglomeration, the smoothness of the fuel electrode layer surface is low, therefore when applying a reduction process to the fuel electrode layer, an adverse effect is imparted to the functional layer laminated on top of the fuel electrode layer. When the fuel electrode layer is reduced, the volume decreases due to the loss of oxygen from within the layer, and when fuel electrode layer smoothness is low, major shape deformations occur in the layer surface, resulting in peeling and the like between these layers and the densely formed electrolyte layer.

0024 In addition, because in the present invention the interconnector is formed by dot agglomeration, the interconnector can be easily formed to be compact and high in dimensional and positional accuracy, even when the dimensional accuracy of the porous support body is low. Also, because the interconnector is compact, film deposition does not require greatly prolonged times even when formed by dot agglomeration, and manufacturing efficiency is not reduced. Furthermore, in the present invention the air electrode layer is also formed by dot agglomeration, and can therefore be formed with a high dimensional and positional accuracy. Also, because no reduction processing is performed on the air electrode layer, no adverse effect is created by shape deformation, even when formed by dot agglomeration, with low surface smoothness.

Thus, according to the present invention the bottom-most layer and the interconnector and air electrode layer formed above that are respectively formed by an appropriate film deposition method, therefore multiple compact electricity generating elements can be formed on a single support body, and the adverse effects of reduction processing can be avoided even when the dimensional accuracy of the porous support body is low.

0025 Also, according to the present invention the porous support body is formed using insulating material, therefore the fuel electrode layers in each electricity generating element are mutually insulated from one another by being formed at a mutual separation on the porous support body. Here, when a fuel electrode layer is formed by dot agglomeration, slurry will penetrate into the porous support body if the viscosity of the jetted slurry is low, resulting in the risk of shorting between fuel electrode layers formed apart from one another. If the viscosity of jetted slurry is made high, slurry penetration can be avoided, but each individual formed dot will be small, therefore the time required for dot film deposition will be extended, and manufacturing efficiency will be extraordinarily reduced. According to the present invention, the fuel electrode layer is formed by surface film deposition, therefore the viscosity of slurry forming the fuel electrode layer can be increased, and fuel electrode layers can be efficiently formed while preventing penetration of slurry into the porous support body.

0026 In the present invention the fuel electrode layer preferably comprises a bottom fuel electrode layer formed on the porous support body, and a top fuel electrode layer formed on the bottom fuel electrode layer, and the viscosity of slurry used to form the bottom fuel electrode layer is higher than the viscosity of slurry used to form the top fuel electrode layer; and the bottom fuel electrode layer is formed of a material with higher conductivity than the top fuel electrode layer, and the top fuel electrode layer is formed of a material with higher catalytic activity than the bottom fuel electrode layer.

0027 In the invention thus constituted, because the bottom layer fuel electrode layer formed on the porous support body is formed of a high viscosity slurry, penetration of slurry into the porous support body can be prevented, and shorting between each fuel electrode layer can be reliably prevented. Also, because the top layer fuel electrode layer is formed of a low viscosity slurry, the surface of the fuel electrode layer can be formed more smoothly, and adverse effects to the electrolyte layer formed thereon can be extremely reduced.

0028 Also, according to the present invention the top layer fuel electrode layer is formed of a high catalytic activity material, therefore the electricity generating reaction can be efficiently made to occur at the boundary with the electrolyte layer and, because the bottom layer fuel electrode layer is formed of a high conductivity material, electrical charges produced by the electricity generating reaction can be transported with low loss.

0029 In the present invention the air electrode layer preferably comprises a bottom air electrode layer formed on the electrolyte layer, and a top air electrode layer formed on the bottom air electrode layer; and the viscosity of slurry used to form the bottom air electrode layer is lower than the viscosity of the slurry used to form the top air electrode layer; and wherein the bottom air electrode layer is formed of a material with higher catalytic activity than the top air electrode layer, and the top air electrode layer is formed of a material with higher conductivity than the bottom air electrode layer.

0030 In the invention thus constituted, the bottom layer air electrode layer is formed by dot agglomeration of a low viscosity slurry, therefore the surface of the bottom layer air electrode layer can be made relatively smooth, and oxygen ion penetration can be made uniform in each portion. On the other hand, the top layer air electrode layer is formed by dot agglomeration, so the top layer air electrode layer can be thickly formed, and the air electrode layer strength increased. This enables the formation of an air electrode layer with stable performance and high strength.

0031 According to the present invention, the bottom layer air electrode layer is formed to be relatively smooth, of a high catalytic activity material, so oxygen ions can be uniformly produced in each part of the air electrode layer, and a stable generating reaction can be implemented. Also, since the top layer air electrode layer is formed of a high conductivity (electron conductivity) material, charges can be transported with low loss in each part within the air electrode layer.

0032 In the present invention, preferably, forming of the masking layer in the surface deposition step is performed by a first mask-forming step for forming a first masking layer by causing a mask-forming agent to adhere to the electrically insulating porous support body on parts where no film deposition is required; the surface deposition step simultaneously forms the functional layers for the multiple electricity generating elements in parts where there is no first masking layer, by bringing the slurry used to form the first functional layer of the functional layers into contact with the porous support body on which the first masking layer is formed, from over the first masking layer; the mask-forming agent adhered to the porous support body penetrates into the porous support body, and the formed masking layer has water repellent properties or oil repellent properties to repel slurry brought into contact therewith in the surface deposition step.

0033 In the invention thus constituted, a first masking layer is formed in a first mask-forming step, on the parts not requiring film deposition on the porous support body. Next, in a surface deposition step, the first functional layers of multiple electricity generating elements are simultaneously formed in parts where no first masking layer is present, by the contacting by slurry with the top of this first masking layer. The mask-forming agent forming the first masking layer penetrates into the porous support body, and the formed first masking layer has water repellent or oil repellent properties so as to repel slurry brought into contact in the surface deposition step.

0034 First, in a solid oxide fuel cell of the type in which multiple electricity generating elements are formed on a single porous support body, and these are connected by an interconnector, parts between the electricity generating elements, which do not contribute to electrical generation, should be narrowly formed in order to improve concentration. On the other hand, a porous support body with electrical insulating properties need only be able to mechanically support each functional layer, so a material with a high porosity is desirable. However, if the spacing between electricity generating elements formed on a porous support body is designed to be narrow, then when functional layers are surface film deposited there is a risk of shorting between adjacent electricity generating elements due to penetration of slurry into the porous support body.

0035 Using the manufacturing method for a solid oxide fuel cell of the present invention as constituted above, the first masking layer is formed in parts not requiring film deposition of a functional layer on the porous support body. The mask-forming agent adhered for the purpose of forming this masking layer is comprised in such a way as to penetrate into the porous support body, therefore slurry made to adhere during surface deposition of a film can be prevented from penetrating the porous support body and shorting inside the porous support body. For this reason, according to the present invention shorting between adjacent functional layers can be prevented even when the spacing between electricity generating elements is designed to be narrow, therefore the degree of concentration of the electricity generating elements can be improved. Also, in the present invention the first masking layer has water repellant or oil repellant properties so as to repel slurry, therefore shorting between adjacent functional layers across the first masking layer can be prevented even when the spacing between electricity generating elements is narrow, i.e., when the width of the first masking layer is designed to be narrow. I.e., because the first masking layer repels slurry adhered in the surface deposition step, slurry adhering during surface film deposition agglomerates on the first masking layer, and shorting between adjacent functional layers can be prevented. Furthermore, functional layers formed on the porous support body are formed by surface film deposition, therefore surface film deposition over a broad surface area can be accomplished in a short time, a smooth surface functional layer can be formed, and no adverse effect is imparted to other functional layers agglomerated on this functional layer.

0036 In the present invention in the first masking-forming step, the mask-forming agent is preferably applied only to predetermined positions where the first masking layer is to be formed by using a dispenser apparatus.

In the invention thus constituted, mask-forming agent is applied at predetermined positions using a dispenser apparatus, therefore a masking layer can be simply and accurately formed on the porous support body.

0037 The present invention furthermore preferably comprises a first provisional sintering step for heating and curing the first functional layer formed in the surface deposition step, wherein the mask-forming agent is selected so that the first masking layer disappears in the first provisional sintering step.

0038 In the invention thus constituted, the first masking layer disappears in the first provisional sintering step, therefore the masking layer can be removed without creating additional steps. Also, the first masking layer is removed by incineration, therefore mask-forming agent which has penetrated into the porous support body can also be simply and reliably removed.

0039 In the present invention, moreover, the first mask-forming step is preferably executed as a liquid application step for applying a liquid substance using the dispenser apparatus comprising a rotating roller and a nozzle linked to the rotating roller; and wherein in the liquid application step, the dispenser apparatus continuously extrudes the liquid substance in a rod shape from a tip of the nozzle while keeping an approximately constant distance between the tip and the surface to which the liquid substance is to be applied.

0040 In the invention thus constituted, multiple first functional layers formed on the porous support body are cured in the provisional sintering step. In the liquid application step, the rotating roller is brought into contact with the cured first functional layer, and liquid substance is continuously extruded while maintaining an essentially constant distance between the nozzle tip and the surface on which the liquid substance is to be applied.

0041 In the invention thus constituted, a first functional layer is first formed by surface film deposition, therefore a first functional layer with a smooth surface can be formed. In addition, because a liquid droplet material application step is performed by a dispenser apparatus with a rotating roller in contact with the first functional layer formed by surface film deposition, the distance between the nozzle tip and the surface to be coated can be set with good precision, and an extruded film deposition can be accurately executed.

0042 In the present invention, the dispenser apparatus preferably applies the liquid substance to the top of the first functional layer while bringing the rotating roller in contact with the adjacent different first functional layer.

0043 In the dispenser apparatus there is structurally some degree of separation between the rotating roller and nozzle. Therefore in order to bring the rotating roller into contact with the first functional layer and execute an extrusion film deposition on the first functional layer from the nozzle requires that the first functional layer be larger than a predetermined size, which results in a limit on the degree to which the electricity generating elements can be made compact. In the invention thus constituted, a liquid substance is applied to the top of an adjacent separate functional layer while the rotating roller is being made to contact the first functional layer, therefore electricity generating elements can be reduced in size, irrespective of the distance between the rotating roller and the nozzle, and the degree of concentration of electricity generating elements can be raised.

0044 The present invention furthermore preferably comprises an interconnector-forming step wherein slurry for forming the interconnector is placed in liquid droplets state and continuously jetted to form slurry dots, and the interconnector layer is formed on the first functional layer by the agglomeration of the dots; wherein in the liquid application step the mask-forming agent is applied onto the interconnector layer formed in the interconnector-forming step to form the masking layer.

0045 In the invention thus constituted, an interconnector layer is formed by dot film deposition on the first functional layer, therefore a compact interconnector layer can be precisely formed. In addition, a mask-forming step for forming a masking layer by applying a mask-forming agent onto the interconnector layer is carried out as a liquid application step; this mask-forming step is performed with the rotating roller of the dispenser apparatus in contact with a smooth first functional layer. Therefore a masking layer can be formed with high precision on an interconnector layer with a lower smoothness than the first functional layer, while causing the nozzle tip to follow the high-smoothness first functional layer surface.

0046 The present invention furthermore preferably comprises: a second surface deposition step for simultaneously forming the electrolyte layers for the multiple electricity generating elements in parts with no masking layer by bringing slurry for forming the electrolyte layer into contact from over the masking layer performed after the liquid application step, and a second provisional sintering step for heating and provisionally sintering the electrolyte layer, thereby causing the masking layer to disappear.

0047 In the invention thus constituted, because the masking layer is formed on an interconnector layer with a dense structure, it can be formed in a shorter time than when formed on a porous support body, even when the mask-forming agent viscosity is low and, because the masking layer is formed by extrusion film deposition, can be formed in a shorter time. Since the formed masking layer disappears due to the provisional sintering step, which provisionally sinters the electrolyte layer, there is no need to provide a special steps for removing the masking layer, and solid oxide fuel cells can be manufactured in a shorter time.

0048 Also, the present invention is a dispenser apparatus used to form multiple electricity generating elements including a fuel electrode layer, an electrolyte layer, and an air electrode layer as functional layers, or an interconnector for connecting the electricity generating elements, on a porous support body of a solid oxide fuel cell, comprising: a rotary support apparatus for supporting the porous support body so that it can be rotated; a head portion including a nozzle for discharging a liquid substance used to form the functional layers or the interconnector toward a surface of the porous support body supported by the rotary support apparatus; and a nozzle drive apparatus mounted on the head portion, for driving the nozzle so that the distance is maintained approximately constant between the surface, on which the liquid substance is to be applied, rotated by the rotary support apparatus, and a tip of the nozzle.

0049 In the invention thus constituted, a liquid substance used to form functional layers or an interconnector is discharged from a nozzle provided in the head portion onto a porous support body supported so as to be rotatable by a rotary support apparatus. The nozzle drive apparatus provided in the head portion drives the nozzle so that the distance between the surface on which the liquid substance is to be applied and the nozzle tip is held approximately constant.

0050 As described above, in film deposition using a dispenser apparatus for discharging a liquid substance used to form a functional layer or the like toward the parts on the surface of a porous support body where a functional layer or the like is to be formed, film thickness can be sufficiently controlled even when the dimensional precision, etc. of the porous support body is low, without the dimensional precision or shape precision of the porous support body directly affecting the thickness of formed functional layers or the like, as occurs with screen printing apparatuses. However, the inventors have discovered a new technical problem, which is that even in film deposition using a dispenser apparatus, when the dimensional precision of the porous support body, etc. is low and the distance between the tip of the nozzle discharging the liquid substance and the surface on which the liquid substance is to be applied changes, the shape precision of the deposited film layer declines.

0051 I.e., problems such as the following were discovered: when the distance between the nozzle tip and the surface on which the liquid substance is to be applied changes, the edge portion of the formed layer becomes wavy (bends). Thus the problem arises that unless the shape of the edge portions of the deposited film layer match, it is difficult to reduce the size of the electricity generating elements formed on the porous support body, and the degree of concentration of electricity generating elements cannot be increased. The invention constituted as described above comprises a nozzle drive apparatus for driving the nozzle so that the distance between the surface onto which the liquid substance is to be applied and the nozzle tip is held approximately constant, therefore a high precision layer can be formed, and the concentration of electricity generating elements can be increased even when the dimensional and shape precision of the porous support body are low.

0052 In the present invention the nozzle driving apparatus preferably drives the nozzle in the direction along which the liquid substance is discharged, so that the distance is approximately constant between the tip of the nozzle and the surface to which the liquid substance is to be applied.

0053 In the invention thus constituted, the nozzle is driven in the direction of liquid substance discharge, therefore the distance between the surface and the nozzle tip can be kept approximately constant without interfering with the movement of the nozzle scanning over the surface on which the liquid substance is to be applied.

0054 In the present invention the head portion preferably makes the liquid substance discharged from the nozzle into a rod shape and continuously extrudes the liquid substance so that the space between the tip of the nozzle and the surface to which the liquid substance is to be applied is bridged by the liquid substance discharged from the tip.

0055 If the viscosity of the liquid substance is low when applying a liquid substance to the surface of a porous support body, a large amount of liquid substance must be applied due to the penetration of much of the liquid substance into the porous support body, and the film deposition time required for application is extended. On the other hand when the viscosity of the liquid substance is high, the shape of the liquid substance when applied remains on the surface of the deposited film layer, and the smoothness of the deposited film layer surface declines. In the invention thus constituted, the liquid substance is continuously extruded in a rod shape from the nozzle, therefore compared to dot film deposition, in which dots of liquid substance placed in a liquid droplet state are agglomerated, a greater amount of liquid substance can be applied per unit time. Therefore even if the viscosity of the applied liquid substance is lowered, film deposition can be efficiently conducted without an extraordinary increase in film deposition time. Also, a deposited film made by continuous extrusion of a liquid substance made into a rod shape is more affected by changes in the distance between the nozzle tip and the surface on which the liquid substance is to be applied than is the case with dot film deposition. However, in the dispenser apparatus of the present invention the nozzle drive apparatus drives the nozzle so that the distance between the surface on which the liquid substance is to be applied and the nozzle tip is held approximately constant, therefore film deposition can be performed with good precision and efficiency even by extruded film deposition.

0056 In the present invention the head portion preferably includes a tank for storing the liquid substance; the nozzle drive apparatus includes a rotating roller which is contacted with the surface rotated by the rotary support apparatus, to which liquid substance is to be applied, and wherein the nozzle is linked to the rotating roller to move together with the rotating roller so that the distance between the tip of the nozzle and the surface on which the liquid substance is to be applied is approximately constant, while the tank does not move together with the movement of the rotating roller.

0057 A conceivable way to maintain the an approximately constant distance between the nozzle tip and the surface on which the liquid substance is to be applied is to electrically measure positional changes on the surface and control the nozzle position accordingly with an actuator. In such a constitution, however, the interposition of positional measurement and actuators make it difficult to achieve a fast response. In the invention thus constituted, the distance between the nozzle tip and the surface is mechanically adjusted using a rotating roller contacting the surface to which liquid substance is to be applied, and a nozzle moving in tandem with same, therefore a fast response can be achieved with a simple constitution. Also, because the tank storing the liquid substance does not move in tandem with the movement of the rotating roller, the weight of the tank imparts no effect on the operation of the nozzle drive apparatus. I.e., when the rotating roller in contact with the surface is mechanically linked with the tank, a fast response becomes difficult due to the effect of the tank weight on movement of the rotating roller, and there is a risk that because the force pressing on the rotating roller increases, the load acting on the porous support body will be excessive.

0058 In the present invention the head portion is preferably constituted so as to be movable in the direction of the rotational center axis of the porous support body, and during the time when the head portion is moving along the rotational center axis to the position at which the liquid substance is to be applied, the rotating roller is spaced from the porous support body.

0059 In the invention thus constituted, the rotating roller is separated from the porous support body while the head portion is being moved in the direction of the porous support body rotational center line up to the position at which liquid substance is to be applied, therefore during this period the rotating roller can be prevented from scraping the surface on which the liquid substance is to be applied, or damaging the surface, or damaging the porous support body.

0060 In the present invention the rotating roller is preferably provided on only one side of the nozzle.

Dimensional errors occurring on the porous support body are almost completely of the bow-shaped bending type. Therefore the nozzle tip can be sufficiently made to follow by simply placing a rotating roller on one side of the nozzle. Also, in the invention thus constituted the rotating roller is placed on only one side of the rotating roller, therefore compared to the case where rotating rollers are placed on both sides, the nozzle drive apparatus can be made lighter and the burden on the porous support body reduced. In addition, when rotating rollers are placed on both sides, there are some cases in which the nozzle moves in a discontinuous manner when transitioning from a state in which one of the rotating rollers is contacting the surface to one in which the other rotating roller is contacting the surface, but by placing a rotating roller on only one side, this type of problem can be avoided.

0061 In the present invention the rotating roller is preferably positioned so that a straight line connecting a contact point with the surface to which liquid substance is to be applied with the tip of the nozzle is approximately parallel to the rotational center axis of the porous support body.

0062 In the invention thus constituted, the straight line connecting the rotating roller contact point in the nozzle tip is oriented to be essentially parallel to the rotational center line of the porous support body, therefore the nozzle tip can be made to follow the surface to which liquid substance is to be applied in an essentially accurate manner even if the contact point and the nozzle tip are separated.

0063 In the present invention the rotating roller is preferably positioned so that the straight line connecting the contact point with the surface to which liquid substance is to be applied with the tip of the nozzle is positioned approximately above the rotational center axis of the porous support body.

0064 In the invention thus constituted, the straight line connecting the rotating roller contact point and the nozzle tip is positioned essentially perpendicularly above the rotational center line of the porous support body, therefore the nozzle and the surface contacting the surface to which liquid substance is to be applied are in essentially a perpendicular positional relationship, and the position of the nozzle tip can be set to a position close to the surface.

0065 In the present invention the rotating roller is preferably disposed so that a distance between the contact point with the surface to which liquid substance is to be applied and the tip of the nozzle is 10 mm or less.

0066 In the invention thus constituted, the distance between the rotating roller contact point and the nozzle tip is set at 10 mm or less, therefore the nozzle tip can be made to follow with sufficient precision relative to shape errors which can generally be anticipated in a porous support body.

### Effect of the Invention

0067 In the method for manufacturing a solid oxide fuel cell of the present invention, an approximately uniform film thickness can be obtained, and manufacturing can be efficiently performed, even when the dimensional precision of the porous support body is low.

Also, in a dispenser apparatus for manufacturing a solid oxide fuel cell of the present invention, a high precision layer can be film deposited even when the dimensional precision of the porous support body is low.

### Brief Description of Figures

0068
Fig. 1: An overall configuration diagram showing a solid oxide fuel cell system containing solid oxide fuel cells according to a first embodiment of the invention.
Fig. 2: A cross-section of a solid oxide fuel cell housing container according to a first embodiment of the invention.
Fig. 3: A perspective view showing the entirety of a solid oxide fuel cell according to a first embodiment of the invention.
Fig. 4: A cross-section showing an expanded view of a functional layer formed on the surface of a porous support body in a solid oxide fuel cell according to a first embodiment of the invention.
Fig. 5: A summary front elevation showing the entirety of a dot deposition apparatus, being a fuel cell manufacturing apparatus according to a first embodiment of the invention.
Fig. 6: A summary cross-section showing the tip portion of a jet dispenser provided on a dot deposition apparatus.
Fig. 7: A summary front elevation showing the entirety of a surface deposition apparatus, being a fuel cell manufacturing apparatus according to a first embodiment of the invention.
Fig. 8: A flow chart showing a surface deposition apparatus operating procedure.
Fig. 9: A summary front elevation showing the entirety of an extruding deposition apparatus.
Fig. 10: A diagram showing an expanded view of the nozzle part of a head portion in an extruding deposition apparatus.
Fig. 11: A flowchart showing the process of a manufacturing method for fuel cells according to a first embodiment of the invention.
Fig. 12: A schematic showing the procedure for laminating functional layers or the like on a porous support body in a fuel cell according to a first embodiment of the invention.
Fig. 13: A diagram schematically showing the state whereby a masking layer is formed on a porous support body.
Fig. 14: A diagram schematically showing the state whereby a masking layer is formed on a first interconnector layer by an extruding deposition apparatus.
Fig. 15: A diagram showing the surface state of an air electrode layer after completion of a second sintering step.
Fig. 16: An electron micrograph of the parts of a fuel cell according to a first embodiment of the invention.
Fig. 17: A cross-section showing an expanded view of a functional layer formed on the surface of a porous support body in a fuel cell according to a second embodiment of the invention.

### Embodiments

0069 Next, referring to the attached drawings, we discuss a solid oxide fuel cell (SOFC) according to an embodiment of the present invention.

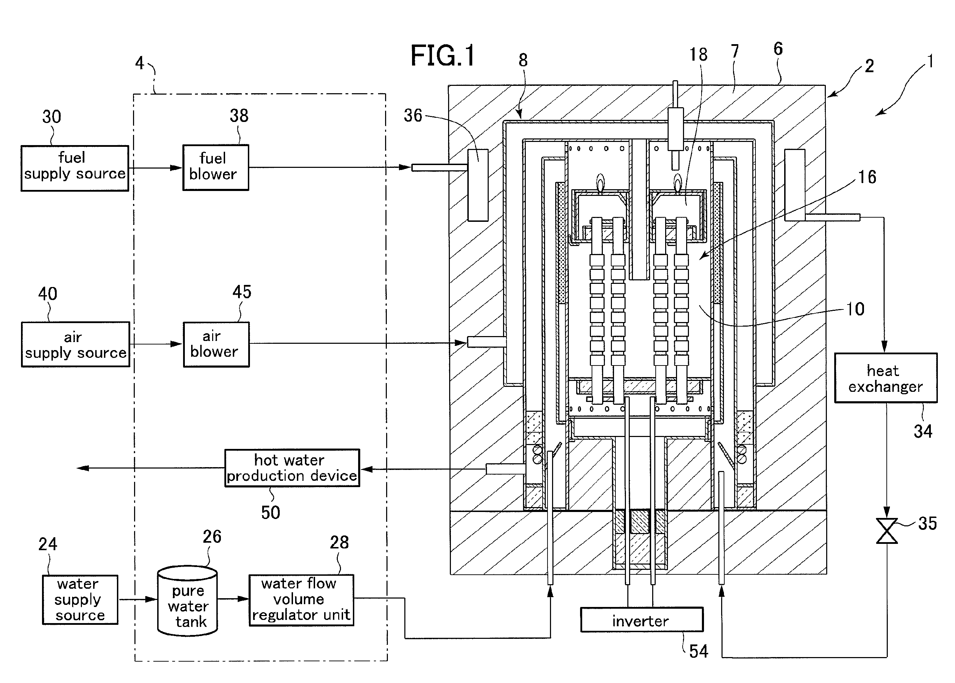

First, referring to Figs. 1 through 16, we explain an individual solid oxide fuel cell according to a first embodiment of the invention.

Fig. 1 is an overview configuration diagram showing a solid oxide fuel cell system containing individual solid oxide fuel cells according to a first embodiment of the invention. As shown by Fig. 1, the solid oxide fuel cell system 1 comprises a fuel cell module 2 and an auxiliary unit 4.

0070 The fuel cell module 2 is furnished with a housing 6, and a fuel cell holding vessel 8 is formed within this housing 6, mediated by the heat storage material 7. A generating chamber 10 is provided inside this fuel cell holding vessel 8; multiple individual fuel cells 16 (individual solid oxide cells) are concentrically disposed within this generating chamber 10, and an electricity generating reaction between fuel gas and air serving as oxidant gas is performed by these individual fuel cells 16.

0071 An exhaust collection chamber 18 is attached to the top end portion of each of the individual fuel cells 16. Residual fuel (off-gas) unused for the generating reaction and remaining in each fuel cell 16 is collected in the exhaust collection chamber 18 attached to the top end portion and flows out of the multiple jet openings placed in the ceiling surface of the exhaust collection chamber 18. Out-flowing fuel is combusted in the generating chamber 10 using remaining air not used for generation, producing exhaust gas.

0072 Next, an auxiliary unit 4 is furnished with a pure water tank 26 for holding water from a municipal or other water supply source 24 and filtering it into pure water, and a water flow volume regulator unit 28 (a "water pump" or the like driven by a motor) for regulating the flow volume of water supplied from this pure tank. Also, the auxiliary unit 4 comprises a fuel blower 38 (a motor-driven "fuel pump" or the like), being a fuel supply apparatus, for regulating the flow volume of hydrocarbon raw fuel gas supplied from the fuel supply source 30, such as municipal gas.

0073 Note that raw fuel gas which has passed through the fuel flow regulator unit 38 is directed into the fuel cell holding vessel 8 to a desulfurizer 32, a heat exchanger 34 and an electromagnetic valve 35 disposed within the fuel cell module 2. The desulfurizer 36 is disposed in a ring shape around the fuel cell housing container 8, and operates to remove sulfur from raw fuel gas. The heat exchanger 34 is provided to prevent the inflow of high temperature raw fuel gas, the temperature of which has risen in the desulfurizer 32, from flowing directly into and degrading the electromagnetic valve 35. The electromagnetic valve 35 is provided to stop the supply of raw fuel gas into the fuel cell housing container 8.

0074 The auxiliary unit 4 is furnished with an air flow regulator unit 45, which is an oxidant gas supply apparatus for regulating the flow volume of air supplied from the air supply source 40.

0075 Furthermore, the auxiliary unit 4 comprises a hot water production device 50 for recovering exhaust gas heat from the fuel cell module 2. Tap water is supplied to this hot water production device 50; this tap water is heated by exhaust gas and supplied to a hot water tank in an external hot water device, not shown.

Also, an inverter 54, which is an electrical power extracting portion (electrical power conversion portion) for supplying power generated by the fuel cell module 2 to the outside, is connected to the fuel cell module 2.

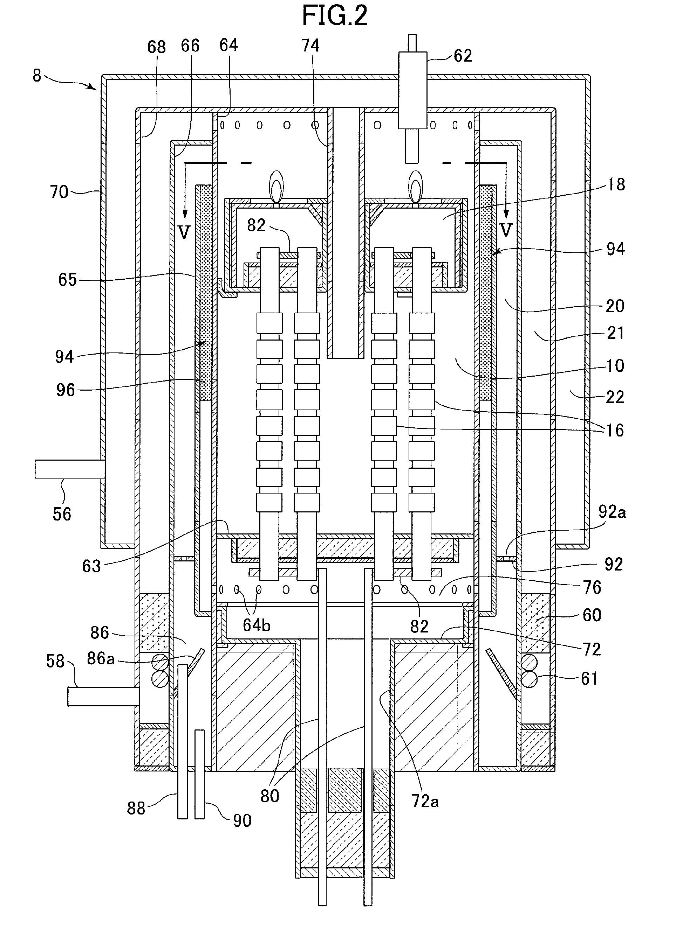

0076 Next, referring to Fig. 2, explain the internal structure of the fuel cell holding vessel 8. Fig. 2 is a cross-section of a fuel cell holding vessel.

As shown in Fig. 2, multiple individual fuel cells 16 are concentrically disposed in the space inside the fuel cell holding vessel 8, and a fuel gas supply flow path 20 serving as fuel flow path, an exhaust gas discharge flow path 21, and an oxidant gas supply flow path 22 are concentrically formed in sequence so as to surround multiple individual fuel cells 16.

0077 First, as shown in Fig. 2, fuel cell holding vessel 8 is an approximately cylindrical sealed vessel; connected to its side surface are an oxidant gas introducing pipe 56, which is an oxidant gas inflow port for supplying generating air, and an exhaust gas exhaust pipe 58, which discharges exhaust gas. In addition, an ignition heater 62 for igniting residual fuel flowing out from the exhaust collection chamber 18 protrudes from the top end surface of the fuel cell housing container 8.

0078 As shown in Fig. 2, disposed within the fuel cell holding vessel 8 so as to surround the perimeter of the individual fuel cells 16, in sequence starting from the inside, are an inside cylindrical member 64, an outside cylinder member 66, an inside cylindrical container 68, and an outside cylindrical container 70. The above-described fuel gas supply flow path 20, exhaust gas discharge flow path 21, and oxidant gas supply fuel path 22 are flow paths respectively constituted between these cylinder members and cylinder containers, and heat is exchanged between adjacent flow paths. The open space at the bottom end of fuel cell housing container 8 is blocked off by an approximately circular dispersion chamber bottom member 72, which forms the bottom surface of the fuel gas dispersion chamber 76 for dispersing fuel into each fuel cell 16.

0079 A combustion catalyst 60 and a sheath heater 61 for heating it are disposed on the lower portion of the exhaust gas discharge flow path 21.

The combustion catalyst 60 is a catalyst filled into the ring-shaped space between the outside perimeter surface of the outside cylinder member 66 and the inside perimeter surface of the inside cylindrical container 68, above the exhaust gas discharge pipe 58. By passing through the combustion catalyst 60, carbon monoxide is removed from exhaust gas descending the exhaust gas discharge flow path 21 to be discharged from the exhaust gas exhaust pipe 58.

The sheath heater 61 is an electrical heater attached so as to surround the outer perimeter surface of the outside cylindrical member 66 at the bottom of the combustion catalyst 60. Upon startup of the solid oxide fuel cell system 1, the combustion catalyst 60 is heated to an activation temperature by powering the sheath heater 61.

0080 The space between the outer perimeter surface of the inside cylinder container 68 and the inner perimeter surface of the outside cylinder container 70 functions as an oxidant gas supply fuel path 22. The oxidant gas introducing pipe 56 is connected to the lower portion side surface of the outside cylinder container 70; the oxidant gas supply fuel path 22 communicates with the oxidant gas introducing pipe 56.

0081 A combustion gas dispersion chamber 76 is constituted between the first affixing member 63 and the dispersion chamber bottom member 72. Also, an insertion pipe 72a for the insertion of bus bars 80 (Fig. 2) is provided at the center of the dispersion chamber bottom member 72. The bus bars 80, electrically connected to each individual fuel cell 16, are routed out to the outside of the fuel cell housing container 8 through this insertion pipe 72a.

0082 An oxidant gas injecting pipe 74 for injecting generating air, circular in cross section, is attached so as to hang down from the ceiling surface of the inside cylinder container 68. This oxidant gas injecting pipe 74 then extends in the vertical direction on the center axial line of the inside cylindrical container 68, and each fuel cell 16 is disposed on concentric circles around it. Air supplied via the oxidant gas supply flow path 22 is injected downward from the tip of the oxidant gas injecting pipe 74, hitting the top surface of the first affixing member 63 and spreading to the entire interior of the generating chamber 10.

0083 The combustion gas dispersion chamber 76 is a cylindrical airtight chamber constituted between the first affixing member 63 and the dispersion chamber bottom member 72, on the top surface of which each of the fuel cells 16 are adjacently vertically arrayed. The inside fuel electrode of each individual fuel cell 16 attached to the top surface of the first affixing member 63 communicates with the interior of the fuel gas dispersion chamber 76. The bottom end portion of each individual fuel cell 16 penetrates an insertion hole in the first affixing member 63 and projects into the combustion gas dispersion chamber 76, and each individual fuel cell 16 is affixed to the first affixing member 63 by adhesion.

0084 As shown in Fig. 2, supplied fuel first rises through the space between the inside perimeter of the external cylindrical member 66 and the outside perimeter of the intermediate cylindrical member 65, then descends through the space between the outside perimeter of the inside cylindrical member 64 and the inside perimeter of the intermediate cylindrical member 65, flowing into the fuel gas dispersion chamber 76 through multiple small holes 64b. Fuel gas which has flowed into the fuel gas dispersion chamber 76 is distributed to each individual fuel cell 16 attached to the ceiling surface of the fuel gas dispersion chamber 76 (first affixing member 63).

0085 In addition, the bottom end portion of the individual fuel cells 16 projecting into the combustion gas dispersion chamber 76 is electrically connected to the bus bars 80 in the combustion gas dispersion chamber 76, and power is extracted to the outside through the electrical conductor conduit 72a. The bus bars 80 are electrically connected to a current collector 82 attached to each fuel cell 16 on the interior of the fuel gas dispersion chamber 76. The bus bars 80 are also connected on the outside of the fuel cell housing container 8 to an inverter 54 (Fig. 1). Note that the current collector 82 is also attached to the top end portions of each fuel cell 16 projecting into the exhaust collection chamber 18. The collection chamber lower member 18b is a circular plate-shaped member open at the top, at the center of which a cylindrical portion is erected to allow penetration of the oxidant gas injection pipe 74.

0086 Next we explain the constitution of the exhaust collection chamber 18. The exhaust collection chamber 18 is a chamber, donut-shaped in cross section, attached to the top end portion of the individual fuel cells 16; an oxidant gas injection pipe 74 penetrates and extends at the center of this exhaust collection chamber 18. Multiple circular penetration holes are placed on the bottom surface of the exhaust collection chamber 18. The top end portions of the individual fuel cells 16 respectively penetrate each of the insertion holes. On the other hand, multiple jet openings for jetting collected fuel gas are disposed on the ceiling surface of the exhaust collection chamber 18. Fuel remaining unused for electrical generation flows out from the top end of each fuel cell 16 into the exhaust collection chamber 18, and fuel collected inside the exhaust collection chamber 18 flows out from the jet ports 18d, where it is combusted.

0087 Next, referring to Fig. 2, we discuss the constitution for reforming raw fuel gas supplied from fuel supply source 30.

First, a vaporizing section 86 for vaporizing water for steam reforming is provided on the bottom portion of the fuel gas supply flow path 20. The vaporizing section 86 is formed by ring-shaped angled plates 86a attached to the bottom inside perimeter of the outside cylinder member 66, and by the water supply pipe 88. The angled plates 86a are thin metal plates formed in a ring shape, the outside perimeter edge of which is attached to the inside wall surface of the outside cylinder member 66. On the other hand the inside perimeter edge of the angled plates 86a is positioned above the outside perimeter edge, and a gap is provided between the inside perimeter edge of the angled plates 86a and the inside perimeter edge of the inside cylinder member 64.

0088 The fuel gas flow path 88 is a pipe extending from the bottom end of the inside cylindrical member 64 in the vertical direction inside the fuel gas supply flow path 20; water supplied to the top surface side of the angled plates 86a agglomerates on the top surface of the angled plates 86a and on inside wall surface of the outside cylindrical member 66. Water supplied to the top surface of the angled plates 86a is vaporized there to produce steam.

0089 Also, a fuel gas introducing portion for introducing fuel gas into the fuel gas supply flow path 20 is placed at the bottom of the vaporizing section 86. Raw fuel gas fed from a fuel blower 38 is introduced into fuel gas supply flow path 20 via a fuel gas supply pipe 90. Raw fuel gas fed from the fuel blower 38 is introduced at the bottom side of the angled plates 86a and rises to the top side of the angled plates 86a as its flow path is constricted by the slope thereof. Raw fuel gas rising to the top side of the angled plates 86a rises together with the steam produced by the vaporizing section 86.

0090 A fuel gas supply flow path partition 92 is provided at the top of the vaporizing section 86 inside the fuel gas supply flow path 20.

Multiple injection ports 92a are provided at equal spacing on the circumference of this fuel gas supply flow path partition 92. Raw fuel gas introduced from the fuel gas supply pipe 90 and steam produced by the vaporization section 86 are first pooled in the space on the bottom side of the fuel gas supply flow path partition 92, then passed through each of the injection ports 92a and injected into the space on the top side of the fuel gas supply flow path partition 92, where they are fully blended.

0091 In addition, the reforming section 94 is provided at the top portion of the annular space between the inner perimeter of the intermediate cylindrical member 65 and the outer perimeter of the inside cylindrical member 64. The reforming section 94 comprises a catalyst holding plate (not shown) attached to the outer wall surface of the inside cylindrical member 64, and a reforming catalyst 96 held by same. Thus the steam reforming reaction SR shown by Eq. (1) proceeds inside the reforming section 94 when raw fuel gas and steam, mixed in the space on the top side of the fuel gas supply flow path partition 92, make contact with the reforming catalyst 96 filled into the reforming section 94.

CₘHₙ + xH₂O→aCO₂ +bCO+cH₂ (1)

0092 Fuel gas reformed in the reforming portion 94 flows downward in the space between the inner perimeter of the intermediate cylindrical member 65 and the outer perimeter of the inside cylindrical member 64, then flows into the combustion gas dispersion chamber 76 and is supplied to each fuel cell 16. The steam reforming reaction SR is an endothermic reaction, however the heat required for the reaction is supplied by the combustion heat of off-gas flowing out from the exhaust collection chamber 18 and the emitted heat generated in each fuel cell 16.

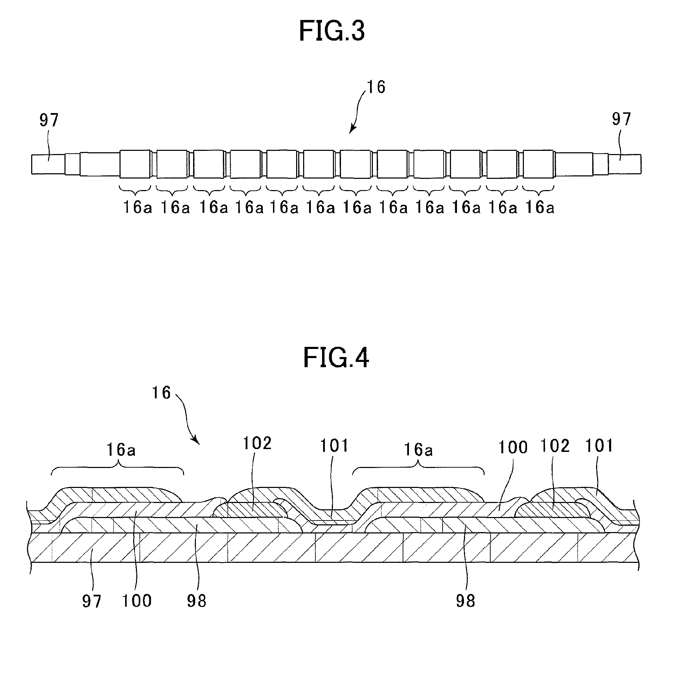

0093 Next, referring to Figs. 3 and 4, we explain the structure of an individual fuel cell according to a first embodiment of the invention.

Fig. 3 is a perspective view showing the entirety of the individual fuel cell; Fig. 4 is a cross-section showing an expanded view of a functional layer formed on the surface of a porous support body in an individual fuel cell.

As shown in Fig. 3, the individual fuel cells 16 (solid oxide fuel cells) of the present embodiment are cylindrical horizontal-band cells using a solid oxide. Multiple electricity generating elements 16a are formed in horizontal bands on each of the fuel cells 16, and a single individual fuel cell 16 is constituted by electrically connecting these in series. Each fuel cell 16 comprises an anode (positive electrode) at one end and a cathode (negative electrode) at the other end; of the multiple individual fuel cells 16, half are disposed so that the top end is an anode and the bottom end is a cathode, while the other half are disposed so that the top end is a cathode and the bottom end is an anode.

0094 As shown in Fig. 4, the individual fuel cells 16 of the present embodiment have a cylindrical porous support body 97 and three functional layers formed thereon, those being a fuel electrode layer 98, an electrolyte layer 100, and an air electrode layer 101. In the individual fuel cells 16, the fuel electrode layer 98, the electrolyte layer 100, and the air electrode layer 101 are sequentially formed on the porous support body 97, thereby forming the electricity generating elements 16a. In each of the electricity generating elements 16a, the fuel electrode layer 98 functions as an anode and the air electrode layer 101 functions as a cathode. Each of these electricity generating elements 16a is electrically connected in series by the interconnect layer 102. In the present embodiment, twelve electricity generating elements 16a are formed on a single individual fuel cell 16, and these are connected by the interconnect layer 102.

0095 Specifically, as shown in Fig. 4, one of the end portions of the fuel electrode layers 98 forming each of the electricity generating elements 16a and the end portion on the opposite side of the air electrode layer 101 are extended. The extended end portion of the fuel electrode layer 98, which is the positive pole of the electricity generating element 16a, is connected by the extended end portion of the air electrode layer 101, which is the negative pole of the adjacently disposed electricity generating element 16a, and by the interconnect layer 102.

0096 Next we explain the constitution of the porous support body 97 and each of the functional layers.

In the present embodiment the porous support body 97 is formed by extruding a cylindrical mixture using forsterite, an electrically insulating material, as its main component, with a binder added, then sintering this extrusion. The fuel electrode layer 98, in this embodiment, is an electrically conductive thin film comprising a blend of NiO powder and 10YSZ (10 mol% Y₂O₃ - 90 mol% ZrO₂) powder.

0097 In the embodiment, solid electrolyte layer 100 is a thin film comprising an LSGM powder composition of La_{0.9}Sr_{0.1}Ga_{0.8}Mg_{0.2}O₃. Electrical energy is produced by the reaction between oxide ions and hydrogen or carbon monoxide through this solid electrolyte layer 100.

0098 In the embodiment, air electrode 101 is an electrically conductive thin film comprising a powder composition of La_{0.6}sSr_{0.4}Co_{0.8}Fe_{0.2}O₃. In the present embodiment, the interconnect layer 102 is an electrically conductive thin film comprising SLT (lanthamum doped strontium titanate) and La₁₋ₓSrₓTi_{1-y-z}Nb_{y}Fe_{z}O₃ (LSTNF, 0.1≤0.8, 0.1≤y≤0.3, 0.3≤z≤0.6).

0099 Next we explain an apparatus for manufacturing an individual fuel cell according to a first embodiment of the invention.

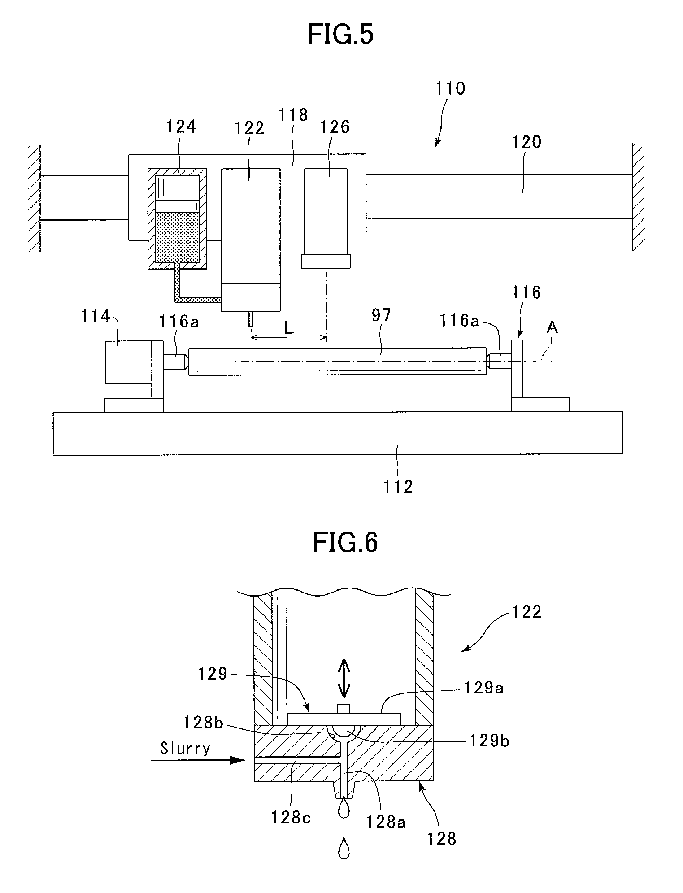

First, referring to Figs. 5 and 6, we explain a dot deposition apparatus used in a dot deposition step for forming functional layers, etc. Fig. 5 is a summary front elevation showing the entirety of a dot deposition apparatus; Fig. 6 is a summary cross-section showing the tip portion of a jet dispenser provided on the dot deposition apparatus.

0100 The above-described functional layers are formed by adhering onto the porous support body 97 a slurry in which the powder constituting each functional layer is suspended, then sintering.

In each of the individual fuel cell 16 manufacturing steps, the dot deposition apparatus 110 turns the slurry for respectively forming the interconnector and the air electrode layer into liquid droplets and selectively and continuously injects these drops onto the parts requiring the dot deposition. The dot deposition apparatus 110 also comprises a positioning function for forming the interconnector or the air electrode layer at predetermined positions.

0101 As shown in Fig. 5, the dot deposition apparatus 110 has a base 112, a motor 114 for rotating the porous support body 97 on which dots are to be film-deposited, an affixing jig 116 for holding the porous support body 97 so that it can be rotated, a head portion 118 for jetting liquid droplets, and a guide rail 120 for guiding this head portion 118.

0102 The motor 114 and affixing jig 116 are installed on the base 112.

The affixing jig 116 served as a rotary support apparatus is constituted to hold the porous support body 97 on which dots are to be film-deposited in a rotatable manner. I.e., the affixing jig 116 holds the porous support body 97 horizontally so as to sandwich it from both ends by respectively inserting conical centering rods 116a into the two ends of the cylindrical porous support body 97. Each of the centering rods 116a is constituted to be rotatable about the center of a horizontal rotational center line A, by which means the porous support body 97 held thereby is held so as to be able to rotate about rotational center line A. The motor 114 is constituted to turn the porous support body 97, held by each of the centering rods 116a, about the rotational center line A.

0103 Here, by holding the cylindrical porous support body 97 by sandwiching it at both ends using the conical centering rods 116a, the porous support body 97 is held in such a way that its centerline matches the rotational center line A of the centering rods 116a. However, because the porous support body 97 is not a perfect cylinder due to manufacturing errors, in actuality the rotational center line A and the porous support body 97 center line are slightly offset.

0104 The head portion 118 has: a jet dispenser 122 for turning a slurry or the like into liquid droplets and jetting same, a slurry vessel 124 for supplying slurry or the like to this jet dispenser 122, and a camera 126 for capturing images of the porous support body 97 on which dots are to be film-deposited.

The fuel gas supply flow path 20 is constituted by moving the head portion 118 parallel to the rotational center line A. When depositing a dot film, the porous support body 97 is rotated as a liquid droplet slurry is jetted from the jet dispenser 122; by feeding the head portion 118 at a predetermined speed along the guide rail 120, a belt-shaped slurry film can be formed around the porous support body 97.

0105 The jet dispenser 122, as shown by Fig. 6, has a nozzle portion 128 for jetting slurry or the like, and a jet actuator 129 for controlling jetting.

A jet nozzle hole 128a directed in the vertical direction is disposed on the nozzle portion 128, and a indentation 128b, wider than the jet nozzle hole 128a, is formed at the end of this jet nozzle hole 128a. In addition, a horizontally oriented slurry supply pathway 128c, placed so as to communicate with the jet nozzle hole 128a, is formed on the nozzle portion 128. Slurry or the like to be jetted is injected from the slurry vessel 124 into the slurry supply pathway 128c. Slurry or the like supplied from the slurry supply pathway 128c flows into the jet nozzle hole 128a and is jetted from the tip (bottom end) of the jet nozzle hole 128a.

0106 The jet actuator 129 has a flexible plate 129a and a projecting portion 129b attached to this flexible plate 129a.

The flexible plate 129a is a flexible rubber plate, attached so as to cover the indentation 128b formed on the nozzle portion 128. The projecting portion 129b is a metal protrusion attached to the center portion of the flexible plate 129a, and is received in the indentation 128b on the nozzle portion 128. A pulsing air pressure acts on the rear surface side (the opposite side to the indentation 128b) of the flexible plate 129a; the flexible plate 129a bends due to fluctuations in this air pressure, so that the projecting portion 129b attached to the flexible plate 129a moves up and down.

0107 When the projecting portion 129b is moved downward, the volume inside the jet actuator 129 housing same is reduced, therefore the slurry or the like filled into the jet nozzle hole 128a and the indentation 128b is turned into liquid droplets and jetted out from the tip of this jet nozzle hole 128a. The pulsing at a predetermined cycle of this air pressure on the rear surface side of the flexible plate 129a causes the projecting portion 129b to move up and down, so that liquid droplet-form slurry or the like is continuously jetted at a predetermined cycle. Liquid droplets of jetted slurry form dots on the porous support body 97, and a slurry film is formed by the agglomeration of these dots.

0108 By feeding the jet dispenser 122 at a predetermined speed along the guide rail 120 while the porous support body 97 is rotated by the motor 114 drive, slurry dots can be made to agglomerate in a horizontal striped shaped at desired positions on the porous support body 97. Note that the thickness of the layer formed by dot film deposition can be controlled by the rotational speed of the motor 114, the feed speed of the jet dispenser 122, the size of the liquid droplets jetted from the jet dispenser 122, and the viscosity of the jetted slurry, etc.

0109 The camera 126 captures images of the fuel electrode layer and interconnector layer, etc. formed on the porous support body 97; the position of the boundary line between these can be identified through image analysis. Also, the horizontal distance L between the position on the image captured by the camera 126 and the jet nozzle hole 128a through which liquid droplets are jetted is pre-stored in memory (not shown). Therefore the jet nozzle hole 128a can be moved from the position identified on the captured image to another position identified on the image by transferring the head portion 118 by distance L along the guide rail 120.

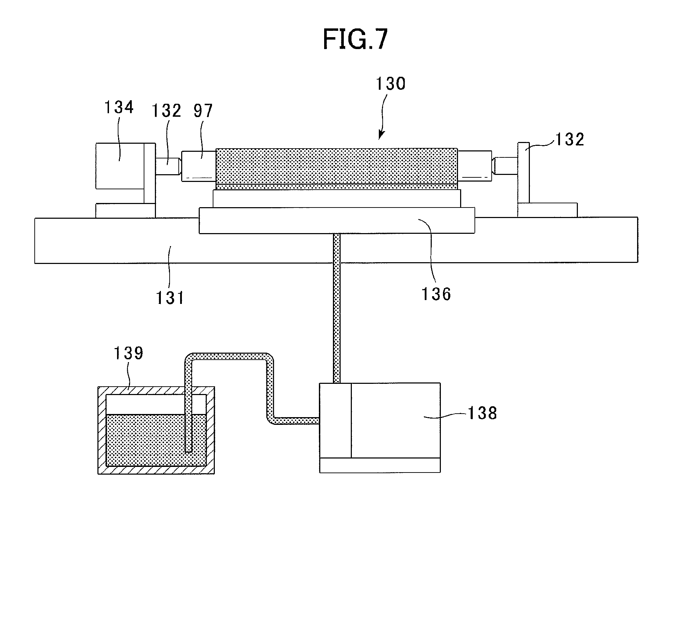

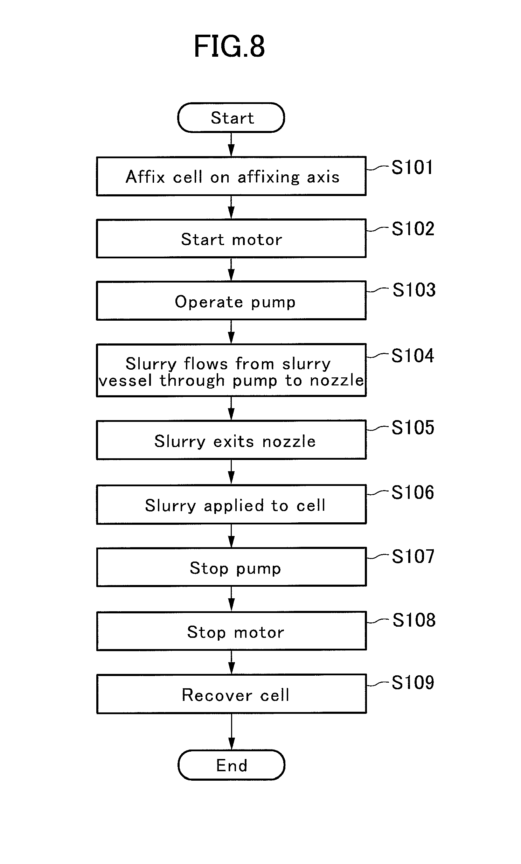

0110 Next, referring to Figs. 7 and 8, we explain the surface film deposition apparatus used in the surface deposition steps for forming a functional layer. Fig. 7 is a summary front elevation showing the entirety of the surface film deposition apparatus; Fig. 8 is a flow chart showing the surface film deposition apparatus operating procedure.

As shown in Fig. 7, the surface film deposition apparatus 130 has an base 131 and a affixing jig 132 disposed on this base 131, a motor 134 for rotating the affixing jig 132, a surface film deposition nozzle 136 for spraying slurry, a pump 138 for pressure feeding slurry to said surface film deposition nozzle 136, and a slurry vessel 139 for holding the slurry being supplied.

0111 The affixing jig 132 served as a rotary support apparatus is disposed on the base 131. The affixing jig 132 orients the porous support body 97 in the horizontal direction, supporting both end portions thereof so that they are able to rotate. The motor 134 is linked to the affixing jig 132, and is constituted to rotate the affixing jig 132 and the porous support body 97 supported thereby through a predetermined number of revolutions around the center axis line of the porous support body 97.

0112 The surface film deposition nozzle 136 is disposed immediately below the porous support body 97, which is supported by the affixing jig 132, so that slurry is sprayed upward toward the porous support body 97.

The pump 138 is constituted to suction in slurry held in the slurry vessel 139 and spray out slurry from the surface film deposition nozzle 136 at a predetermined flow rate.

0113 A slit-shaped fine nozzle hole (not shown) is disposed on the surface film deposition nozzle 136, so that slurry is uniformly sprayed onto the entire region over which the surface film is to be deposited on the porous support body 97. Slurry sprayed from the surface film deposition nozzle 136 is immediately adhered to the horizontally-disposed porous support body 97, and each of the functional layers is simultaneously deposited on the multiple electricity generating elements 16a formed on the porous support body 97. Note that, as described below, masking has been previously applied by the dot film deposition apparatus 110 to parts on the porous support body 97 not requiring surface film deposition. Slurry not adhering to and remaining on the porous support body 97 flows down around the surface film deposition nozzle 136 and is recovered.

0114 Next, referring to Fig. 8, we explain the procedure for surface film deposition.

First, in step S101 in Fig. 8, the porous support body 97 on which a surface film is to be deposited is affixed to the affixing jig 132. Note that masking has already been applied to the parts on the porous support body 97 not requiring surface film deposition. Next, in step S102, the motor 134 is started and the porous support body 97 is rotated around the center axis line thereof through a predetermined number of rotations. Also, the pump 138 is operated in step S103. This results in uptake of slurry from the slurry vessel 139 and pressure feeding of slurry to the surface film deposition nozzle 136 (step S104). Pressure fed slurry is sprayed upward from the surface film deposition nozzle 136 (step S 105). Slurry sprayed from the surface film deposition nozzle 136 is coated onto the surface of the porous support body 97 rotating above the surface film deposition nozzle 136 (step S106).

0115 Slurry not adhering to the porous support body 97 and remaining flows down around the surface film deposition nozzle 136. Also, excess slurry adhering to the porous support body 97 flows down due to centrifugal force on the rotating porous support body 97, so that a slurry film of a predetermined thickness is deposited on the porous support body 97. Therefore the thickness of the layer formed on the porous support body 97 can be controlled by rpm of the porous support body 97, the spray flow volume from the surface film deposition nozzle 136, and the slurry viscosity, etc.

Next, the pump 138 is stopped in step S107, and the motor 134 is stopped in step S108. Furthermore, the porous support body 97 on which a film has been deposited is removed from the affixing jig 132 in step S109, and the surface deposition step is completed.

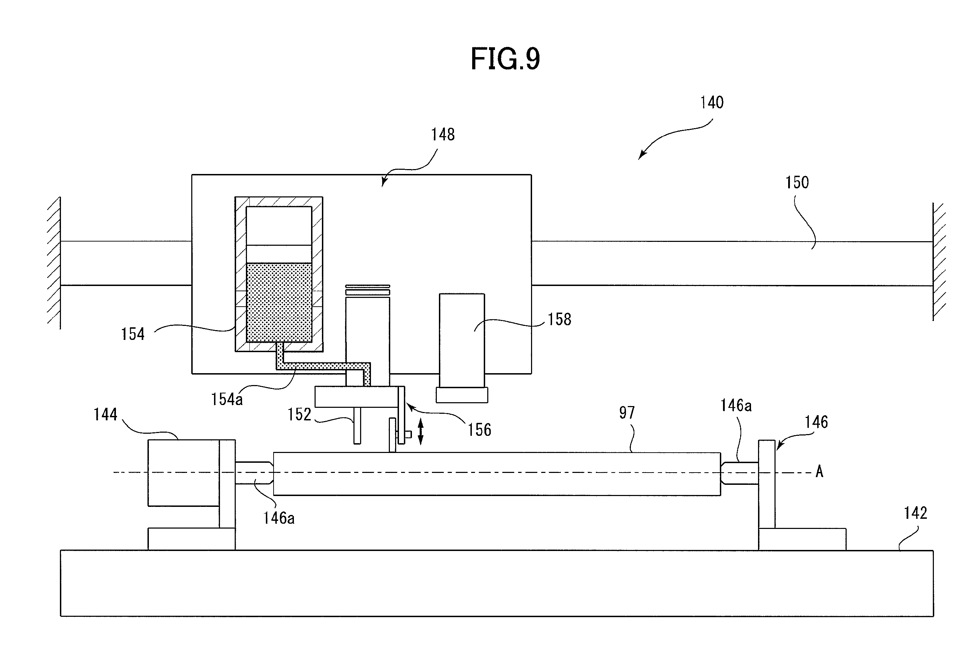

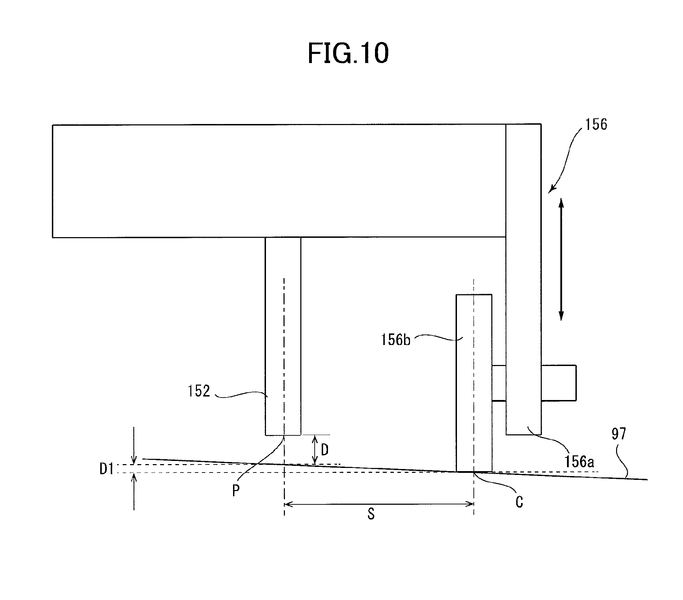

0116 Next, referring to Figs. 9 and 10, we explain an extruding deposition apparatus used in an extrusion deposition step for forming masking layers and the like. Fig. 9 is a front elevation showing in summary form the entirety of the extruding deposition apparatus; Fig. 10 is an expanded view of the nozzle part of a head portion in an extruding deposition apparatus.

0117 The above-described dot deposition apparatus 110 turns a slurry for forming each of the functional layers into liquid droplet form and continuously discharges, thereby depositing film dots in predetermined positions. In contrast, an extrusion depositing apparatus 140 applies liquid substance to predetermined positions by continuously extruding a liquid substance in a rod shape from the nozzle tip. These dot deposition apparatus 110 and extrusion depositing apparatus 140 are both dispenser apparatuses for applying a liquid substance to only predetermined positions on a surface to which liquid substance is to be applied, and are constituted to discharge and apply the liquid substance in a narrower range than the above-described surface deposition apparatus 130.

Thus the extrusion depositing apparatus 140 comprises the function of applying any desired liquid substance to predetermined positions, but in the present embodiment is used for the application of a mask-forming agent, i.e., for the formation of a masking layer.

0118 As shown in Fig. 9, the extrusion depositing apparatus 140 has: a motor 144 for rotating the porous support body 97 receiving the extrusion film deposition, a pedestal 142, an affixing jig 146 for holding the porous support body 97 so as to be able to rotate; a head portion 148 for applying liquid substance, and a guide rail 150 for guiding this head portion 148.

0119 A motor 144 and an affixing jig 146 are installed on the pedestal 142.

The affixing jig 146, which is a rotation support apparatus, is constituted to hold the porous support body 97 on which extrusion film deposition is to be performed in a manner capable of rotation. I.e., the affixing jig 146 holds the porous support body 97 horizontally so as to sandwich it from both ends by respectively inserting conical centering rods 146a into the two ends of the cylindrical porous support body 97. Each of the centering rods 146a is constituted to be rotatable about the center of a horizontal rotational center line A, by which means the porous support body 97 held thereby is held so as to be able to rotate about rotational center line A. The motor 144 is constituted so as to be able to turn the porous support body 97, held by each of the centering rods 146a, about the rotational center line A.

0120 Here, by holding the cylindrical porous support body 97 by sandwiching it at both ends using the conical centering rods 146a, the porous support body 97 is held in such a way that its centerline matches the rotational center line A of the centering rods 146a. As described above, however, in actuality the center lines of the rotational center line A and the porous support body 97 are very slightly offset.

0121 The head portion 148 has a nozzle 152 for continuously discharging a mask-forming agent or the like, a tank 154 for holding the mask-forming agent or the like supplied to the nozzle 152, a nozzle drive apparatus 156 for driving the nozzle 152, and a camera 158 for capturing images of the porous support body 97 to which the liquid substance is to be applied.

The nozzle 152 is an elongated cylindrical nozzle extending perpendicularly downward within a plane which includes the rotational center line A of the porous support body 97, and is constituted to continuously discharge a liquid substance in a rod shape from the bottom end facing perpendicularly downward.

The tank 154 is constituted to hold a liquid substance such as a mask-forming agent or the like which is supplied to the nozzle 152. The tank 154 is affixed to the head portion 148, and is connected to the nozzle 152 through a flexible pipe 154a. The liquid substance is extruded under a predetermined pressure from the tank 154, made to flow in a rod shape at a predetermined flow rate from the tip of the nozzle 152, and continuously discharged.

0122 The camera 158 captures images of the fuel electrode layer and interconnector layer, etc. formed on the porous support body 97; the position of the boundary line between these can be identified through image analysis. Also, the horizontal distance L between the position on the image captured by the camera 158 and the nozzle 152 from which the liquid substance is extruded is prestored in memory (not shown). Therefore the nozzle 152 can be moved from the position identified on the captured image to another position identified on the image by transferring the head portion 148 by distance L along the guide rail 150.

0123 The guide rail 150 is constituted by moving the head portion 148 parallel to the rotational center line A. The head portion 148 is fed along the guide rail 150 to the position at which the film is to be extrusion deposited on the porous support body 97. During extrusion film deposition, a band-shaped slurry film can be formed around the porous support body 97 by rotating the porous support body 97 while discharging a liquid substance from the nozzle 152. Also, depending on the form of the layer to be extrusion film deposited, the head portion 148 can be fed at a predetermined speed along the guide rail 150 during extrusion film deposition.

0124 The nozzle drive apparatus 156 is placed in the lower portion of the head 148 as shown in Fig. 10. The nozzle drive apparatus 156 has an arm portion 156a attached so as to be movable relative to the head portion 148, and a rotating roller 156b placed at the end of this arm portion 156a.

0125 The rotating roller 156b is placed on only one side of the nozzle 152 and is constituted to be passively rotated by contact with the surface of the rotating porous support body 97. In this embodiment, the rotating roller 156b is pressed into the surface of the porous support body 97 by the dead weight of the nozzle drive apparatus 156, and is always placed in contact with the surface of the rotating porous support body 97. Therefore the rotating roller 156b is moved in the up-and-down direction (vertical direction), which is the direction in which the liquid substance is discharged, together with the movement of the surface of the porous support body 97. Also, the porous support body 97 supported by the affixing jig 146 is slightly bent due to manufacturing errors and the like. For this reason, the position on the surface of the porous support body 97 rotating about the rotational center line A (Fig. 9) is slightly moved, together with rotation, in the up-and-down direction shown in Fig. 10. As a result, the rotating roller 156b in contact with the surface of the porous support body 97, and the arm portion 156a to which this arm portion 156a is attached, are moved in the up-and-down direction in Fig. 10 so as to follow the "wobbling" of the surface of the porous support body 97.

0126 Here the nozzle drive apparatus 156 is constituted to move the nozzle 152 in tandem with the motion of the rotating roller 156b, therefore the nozzle 152 is also moved in the direction of liquid substance discharged so as to follow the "wobbling" of the porous support body 97 surface. Therefore the distance D between the nozzle 152 tip P and the surface of the porous support body 97 can be kept approximately constant even when the surface of the porous support body 97 moves during rotation due to manufacturing errors or the like in the porous support body 97. Note that in the present embodiment the contact point C between the rotating roller 156b and the porous support body 97 surface, and the nozzle 152 tip P, is each positioned vertically above the rotational center line A of the porous support body 97. Also, it is desirable for the projection in the vertical direction of the straight line connecting the contact point C and the nozzle 152 P to be positioned parallel to the rotational center line A, and in the present embodiment the projection of the straight line connecting the contact point C and the tip P matches the rotational center line A. Therefore liquid substance on the porous support body 97 passes through the point to be applied (a point directly underneath the tip P) and the nozzle 152 is directed so as to be approximately perpendicular to the surface contacting the cylindrical porous support body 97. Note also that in the present embodiment the rotating roller 156b is pressed onto the surface of the porous support body 97 by the deadweight of the nozzle drive apparatus 156, and the nozzle 152 is moved in the vertical direction in tandem with the rotating roller 156b. On the other hand the tank 154 supplying liquid substance is affixed to the head portion 148, and is connected through a flexible pipe 154a to the nozzle 152, therefore the tank 154 does not move in tandem with the rotating roller 156b or the nozzle 152. As a result, the pressing force of the rotating roller 156b can be made constant irrespective of the dead weight of the liquid substance contained in the tank 154. Also, even when a large amount of liquid substance is held and the dead weight of the tank 154 is large, the rotating roller 156b is pressed down by that dead weight, and no burden is placed on the fragile porous support body 97.

0127 Furthermore, in the present embodiment the distance S between the contact point C and the tip P is set to be approximately 10 mm in the rotational center line A direction (horizontal direction). Also, the distance D between the nozzle 152 tip P and the porous support body 97 surface is set to be approximately 0.3 mm when there is no manufacturing error in the porous support body 97 (when the porous support body 97 surface is horizontally oriented). Thus since the nozzle 152 tip P is positioned closed to the surface of the porous support body 97, the liquid substance is applied as it is pressed out into a rod shape, bridging between the tip P and the porous support body 97 surface.

0128 Here, because the liquid substance is being pressed continuously at a fixed flow rate from the tip of the nozzle 152, large changes in the distance D between the nozzle 152 tip P and the porous support body 97 surface result in a zig-zagging of the liquid substance layer applied onto the porous support body 97, or a non-uniform layer width. In the present embodiment a sufficiently uniform layer can be formed because the distance D between the nozzle 152 tip P and the porous support body 97 surface is maintained to be approximately constant by the nozzle drive apparatus 156. In actuality, however, the height of the contact point C in Fig. 10 differs from the height of the surface of the porous support body 97 immediately below the nozzle 152 (the porous support body 97 surface tilts), therefore the distance D varies slightly. In the present embodiment, because the porous support body 97 is a baked material with forsterite powder as its primary component, shape errors occurring at the time of manufacture are almost all of the type whereby the entire porous support body 97 gradually curves in a bow shape. The tilting resulting from this curvature is at the maximum on the order of 2% (a 2 mm deflection relative to 100 mm in the longitudinal direction of the porous support body). Therefore since the distance S between the contact point C and the tip P is 10 mm in the present embodiment, the height difference D1 between the contact point C and the position of the nozzle 152 can be kept to a maximum of approximately 0.2 mm (10 mm x 0.02), and a sufficiently uniform layer can be formed. Thus the shorter the distance S between the contact point C and the tip P, the greater the advantage for maintaining a constant distance D between the nozzle 152 tip P and the porous support body 97 surface; 10 mm or less is preferred, but some degree of length for the distance S is required to mechanically constitute a nozzle drive apparatus 156.

0129 The above-explained dot deposition apparatus 110, surface deposition apparatus 130, extrusion depositing apparatus 140 and heating oven for sintering the film-deposited functional layers constitute a solid oxide fuel cell manufacturing system.

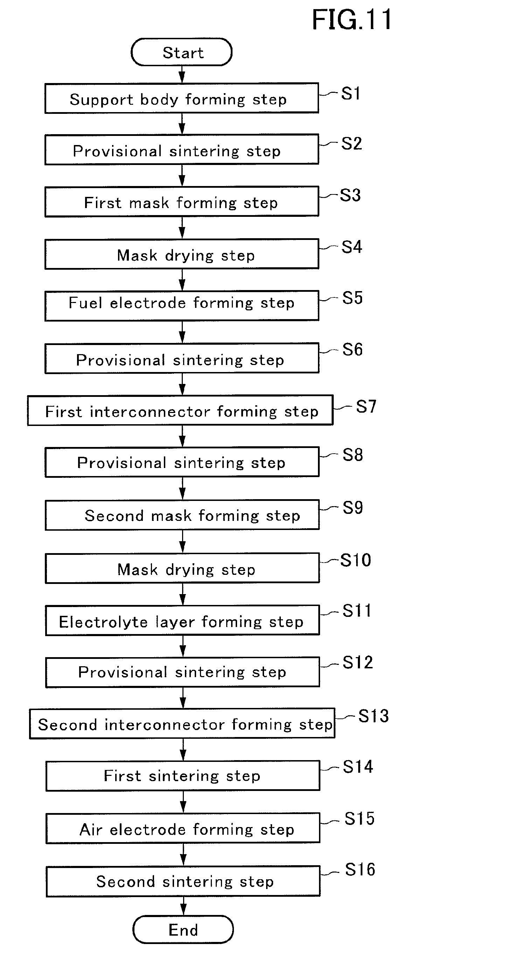

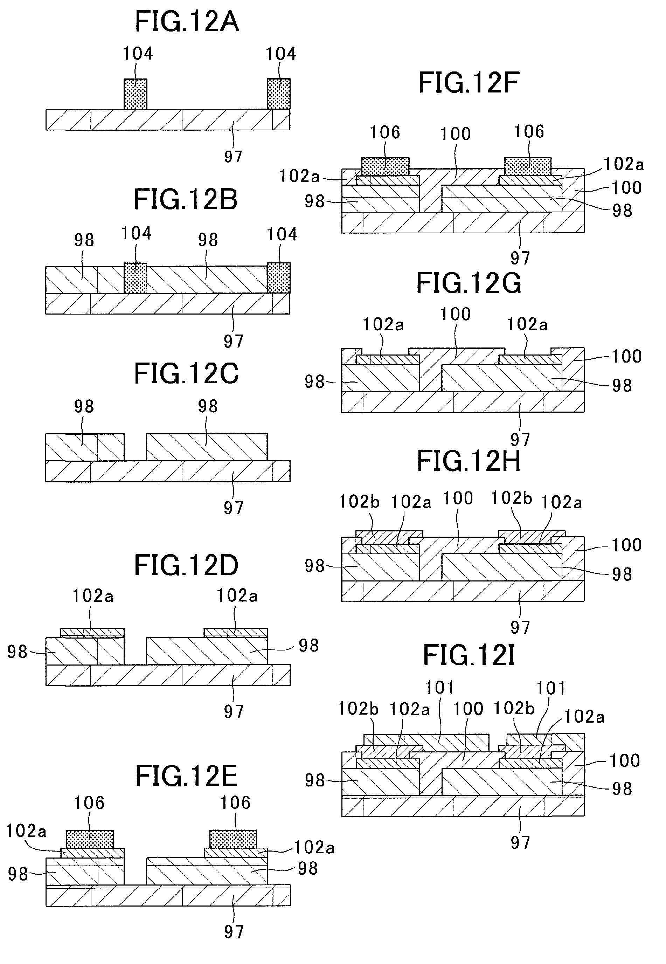

0130 Next, referring to Figs. 11 and 12, we explain a method for manufacturing an individual solid oxide fuel cell according to a first embodiment of the invention.

Fig. 11 is a flowchart showing the procedure of the manufacturing method of the present embodiment; Figs. 12A-12I are schematic showing the procedure for laminating functional layers or the like on a porous support body. Note that Figs. 12A-12I show the overlaying of each functional layer schematically, and do not specifically show the cross sectional shapes or dimensions of each layer.

0131 First, in step S1 of Fig. 11, a forsterite porous support body 97 is formed as a support body forming step. Specifically, a clay-like material made of forsterite powder with an added binder is extruded and molded into a cylinder shape by an extrusion molding machine (not shown).

Next, in step S2, as a provisional sintering step the porous support body 97 extruded in step S1 is heated and provisionally sintered in a heating oven (not shown). In the present embodiment, the porous support body 97 molded body is heated and provisionally sintered for approximately 2 hours to approximately 1000°C in a heating oven. This provisionally sintered forsterite porous support body 97 is an electrically insulating body, approximately white in color.

0132 Next, in step S3 as a first mask-forming step, a mask-forming agent is coated onto the porous support body 97 provisionally sintered in step S2, forming a masking layer 104. Specifically, in this first mask-forming step a masking layer 104 is extrusion film deposited by the extrusion depositing apparatus 140, which is a dispenser apparatus. I.e., the first mask-forming step is a step for applying mask-forming agent onto the porous support body 97 to extrusion film deposit the masking layer 104 by continuously extruding the liquid mask-forming agent into the area forming the masking layer 104 using the nozzle 152 on the extrusion depositing apparatus 140 (Fig. 9). Therefore in the first mask-forming step, the extrusion depositing apparatus 140 functions as a masking layer-forming apparatus. Also, the first mask-forming step is implemented as a liquid application step for applying a mask-forming agent, which is a liquid substance, using a dispenser apparatus.

0133 As shown in Fig. 12A, the masking layer 104 is formed in the parts on the porous support body 97 not requiring deposition of a fuel electrode layer 98 film. The mask-forming agent has a relatively low viscosity and therefore also penetrates to some degree into the interior of the porous support body 97, which is an ultra-porous body. Therefore during surface film deposition of the fuel electrode layer 98 in subsequent step (step 5), the slurry for forming the fuel electrode layer 98 penetrates into the interior of the porous support body 97, and the adjacently disposed fuel electrode layer 98 can be prevented by the presence of the mask-forming agent from shorting inside the porous support body 97. Also, because the quantity of the liquid substance discharged per unit time is greater with the extrusion depositing apparatus 140 than with the dot deposition apparatus 110, a masking layer 104 of a predetermined film thickness can be formed in a relatively short time even if the mask-forming agent penetrates into the interior of the porous support body 97. On the other hand, if the mask-forming agent viscosity is too high, the smoothness of the formed masking layer 104 surface will be insufficient. In this case, slurry will pool on the masking layer 104 when surface film deposition is carried out in the next step, and this slurry will remain in parts where film deposition is not required. In the present embodiment, the viscosity of the mask-forming agent is appropriately adjusted.

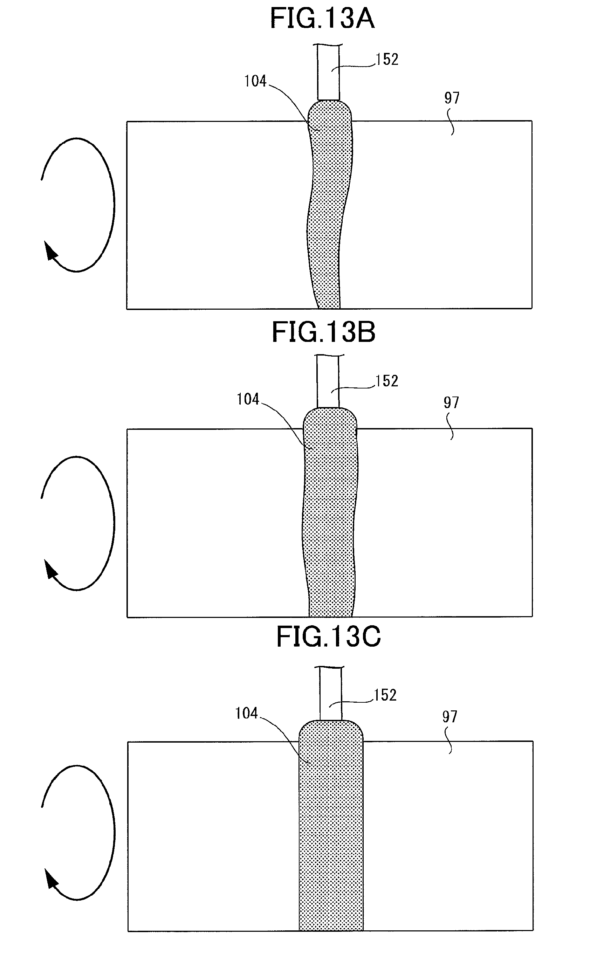

0134 Fig. 13 is a diagram schematically showing the state when a masking layer 104 is formed on a porous support body 97.

First, as shown in Fig. 13A, mask-forming agent, continuously pressed out at a fixed flow rate from the tip of the nozzle 152, assumes a rod shape and adheres to the rotating porous support body 97, and is continuously applied as it forms a bridge between the nozzle 152 tip and the porous support body 97 surface. However, after the start of application of the mask-forming agent during the period up until the porous support body 97 has made one revolution, the width of the formed masking layer 104 is narrow and slightly zig-zagged (Fig. 13A). As shown in Fig. 13B, upon starting a second revolution after application has begun, the applied mask-forming agent spreads from the center of the nozzle 152 to both sides, widening in width, and the applied mask-forming agent is leveled by the tip of the nozzle 152, so that the width of the masking layer 104 gradually increases and the thickness at the center portion takes on a thick projecting shape. Furthermore, as shown in Fig. 13C, upon entering a third revolution after the start of application, the width of the masking layer 104 becomes essentially uniform. Note that in the present embodiment, during the formation of a single masking layer 104 the position of the nozzle 152 is fixed, and is not fed in the rotational center line A direction of the porous support body 97.

0135 Thus the number of revolutions required to obtain a masking layer 104 with a uniform width and a projecting thick center portion can be adjusted using the viscosity and flow rate of the mask-forming agent, the rotation speed of the porous support body 97, and the like. Also, when forming a masking layer 104 of an even wider width, either a large diameter nozzle may be used, or a broad width nozzle may be used. In the present embodiment, the Fluoro Surf™ FS-1000 series or FG-3020 series by Fluoro Technology, Inc., being a fluorine resin mask-forming agent, is used as the mask forming agent.

0136 Positioning of the region where the masking layer 104 is formed in this first mask-forming step is performed by referencing to the affixing jig 146 provided on the extrusion depositing apparatus 140. I.e., the extrusion depositing apparatus 140 moves the head portion 148 by a predetermined distance from the pre-stored position of the affixing jig 146, and extrusion film deposition of the masking layer 104 is started from that position as the porous support body 97 is rotated. For the entirety of the masking layer 104 formed in the first mask-forming step, the position is determined by the amount by which the head portion 148 is fed, using the position of the affixing jig 146 as reference.

0137 Therefore the masking layer 104 formed in the first mask-forming step is formed into a ring shape perpendicular to the rotational center line A of the extrusion depositing apparatus 140. Hence when there is deflection of the porous support body 97 due to manufacturing error, etc., the masking layer 104 is not, precisely speaking, perpendicular to the center axis line of the porous support body 97. However, this type of error is not a problem in the fuel cells 16, and by virtue of forming the masking layer 104 perpendicular to the rotational center line A of the extrusion depositing apparatus 140, there is no need to perform positioning correction in response to bending of the porous support body 97, etc., and film deposition can be easily performed. Also, in the present embodiment the nozzle drive apparatus 156 maintains the distance D between the nozzle 152 tip and the porous support body 97 surface essentially constant, therefore the thickness of the formed layer is not prone to be affected even if the position of the porous support body 97 surface varies due to deflection. Therefore a masking layer 104 with an accurate thickness can be formed even when there are manufacturing errors in the porous support body 97.

0138 Note that in the present embodiment, after the extrusion depositing apparatus 140 forms a single masking layer 104, the arm portion 156a is lifted up when the head portion 148 is moved to the position at which another masking layer 104 is formed. I.e., the head portion 148 is moved along the guide rail 150 to the position at which the next masking layer 104 will be formed, with the rotating roller 156b and the nozzle 152 separated from the porous support body 97. By this means, damage to the porous support body 97 from rubbing of the surface by the rotating roller 156b, or damage to an already formed masking layer 104, etc. can be prevented.

0139 Also, as described above, by raising the center portion of masking layer 104 and forming it into a projecting shape, the slurry brought into contact from the top of the masking layer 104 in the next fuel electrode layer-forming step quickly flows off the outside of the masking layer 104. Thus the agglomeration of a large amount of slurry on the masking layer 104 resulting in the formation of fuel electrode in unnecessary parts thereof can be suppressed.

0140 Next, in step S4, a mask drying step for drying the mask-forming agent applied in the step S3 first mask-forming step is carried out. In the present embodiment the porous support body 97 to which the mask-forming agent was applied in the mask drying step is heated in a drying oven and solvent in the mask-forming agent is vaporized and removed. This mask drying step is executed at a relatively low temperature so that the resin mask-forming agent itself is not incinerated and eliminated. Alternatively, the porous support body 97 to which the mask-forming agent is applied can be left alone for a predetermined time, and the mask-forming agent naturally dried.

0141 Next, in step S5, a fuel electrode layer 98, being one of the functional layers on the electricity generating elements 16a, is film-deposited on a porous support body 97 on which the masking layer 104 was formed in step S3 as a fuel electrode-forming step. Specifically, in the fuel electrode layer-forming step which is the first surface deposition step, a slurry for forming a fuel electrode contacts the porous support body 97 from over the masking layer 104, and a fuel electrode layer 98 is surface film deposited in parts where no masking layer 104 is present. I.e., a porous support body 97 on which the masking layer 104 was formed in step S3 is affixed to the affixing jig 132 in the surface deposition apparatus 130, and slurry discharged from the lower surface deposition nozzle 136 is applied to the masking layer 104 from over as the porous support body 97 is rotated. Therefore in the fuel electrode layer-forming step, the surface deposition apparatus 130 functions as a first surface deposition apparatus or a fuel electrode layer-forming apparatus.

0142 This fuel electrode-forming step is a lower layer surface deposition step performed on the bottom-most side; this is the surface deposition step in which each of the fuel electrode layers 98 on all the electricity generating elements 16a formed on a single porous support body 97 is simultaneously surface film deposited. Thus in the fuel electrode-forming step, because the fuel electrode layer 98 is formed by surface film deposition, the surface of the fuel electrode layer 98 can be formed more smoothly than extrusion deposited film or dot deposited film. Also, the mask-forming agent applied in step S3 penetrates into the interior of the porous support body 97 below the masking layer 104, therefore slurry applied in the surface deposition step can be prevented from penetrating into the porous support body 97, and shorting of adjacent fuel electrodes can be prevented.

0143 In the present embodiment the slurry used in the fuel electrode-forming step is a liquid in which a mixture of NiO power and 10YSZ powder is suspended in an alcohol solvent, while on the other hand the mask-forming agent forming the masking layer 104 is an oil-resistance substance. Therefore slurry does contact the entire porous support body 97 from over the masking layer 104, but slurry on the masking layer 104 is repelled by the mask-forming agent and does not agglomerate on the masking layer 104. As a result, as shown in Fig. 12B, film of the fuel electrode layer is formed only in parts where there is no masking layer 104. At this point, the center of the masking layer 104 is formed to have a thick projecting shape, so adhered slurry quickly flows off the outside of the masking layer 104, and no agglomeration occurs on the masking layer 104. Moreover, as shown in Fig. 4, slurry agglomerated on the porous support body 97 is repelled by the oil-resistant mask-forming agent and does not adhere to the masking layer 104, therefore the edge portion is agglomerated in a rounded shape due to surface tension on the slurry. Note that in the present embodiment an oil-resistant material is used as the mask-forming agent, but depending on the slurry used, a water-resistant mask-forming agent can also be used.

0144 Solvent in the mask-forming agent is sufficiently removed in the mask drying step of step S4, therefore adhered slurry does not become incorporated into the masking layer 104. I.e., if solvent in the mask-forming agent is not sufficiently removed, the applied slurry and the mask-forming agent can become partially mixed, or the mask-forming agent and the slurry can react chemically so that the slurry is incorporated into the masking layer 104. There is a risk that slurry incorporated into the masking layer 104 will be left remaining on the porous support body 97 even after the subsequent provisional sintering step (step S6), causing the adjacent fuel electrode layer 98 to short.

0145 In addition, in the fuel electrode-forming step, a drying step (not shown) for drying agglomerated slurry is performed after film of the fuel electrode layer is formed on the porous support body 97. In the present embodiment, in the drying step the slurry is dried for approximately 5 minutes at approximately 100°C. Note that the masking layer 104 formed on the porous support body 97 continues to be maintained as is even after the drying step.

0146 Next, in step S6, a provisional sintering step is executed. In the provisional sintering step, a porous support body 97, on which film of a fuel electrode layer was formed in step S5, is heated by a heating oven (not shown) and provisionally sintered. As shown in Fig. 12C, the masking layer 104 formed on the porous support body 97 is vaporized and eliminated by the provisional sintering step, and the porous support body 97 under the masking layer 104 is exposed. In the present embodiment the fuel electrode layer 98 is heated by a heating oven for approximately 2 hours at approximately 1000°C and cured. The color of the provisionally sintered NiO/YSZ fuel electrode layer 98 is a light green color.

0147 Next, in step S6, as a first interconnector-forming step an interconnector layer is formed by the dot deposition apparatus 110 on the fuel electrode layer 98 provisionally sintered in step S5. Specifically, in the first interconnector-forming step, a first interconnector layer 102a, which is part of the interconnect layer 102, is formed by dot film deposition. I.e., the first interconnector layer-forming step is a dot deposition step for forming a first interconnector layer 102a by forming slurry dots in a predetermined area on the fuel electrode layer 98 by continuously turning slurry for forming the first interconnector layer 102a into liquid droplet form and jetting it onto the area where the first interconnector layer 102a is to be formed, thereby forming the first interconnector layer 102a through the agglomeration of these dots. Therefore in the first interconnector-forming step, the dot deposition apparatus 110 functions as an interconnector forming apparatus. Also, the extrusion depositing apparatus 140 can be used as a dispenser apparatus for forming the first interconnector layer 102a. In this case the extrusion depositing apparatus 140 functions as an interconnector-forming apparatus. Note that in the present embodiment, a liquid in which LSTNF powder is suspended in an alcohol solvent can be used as the slurry for forming the first interconnector layer 102a.

0148 As shown in Fig. 12D, the first interconnector layer 102a is formed at one end portion on the fuel electrode layer 98. Positioning of the location where this first interconnector layer 102a is formed is carried out based on image analysis. I.e., an image is captured by the camera 126 of the porous support body 97 affixed to the affixing jig 116 in the dot deposition apparatus 110, and the boundary line between the part where the fuel electrode layer 98 is formed on the porous support body 97 and the part where it is not formed is identified through image analysis. A predetermined first interconnector layer 102a is dot film deposited on the fuel electrode layer 98 based on this identified boundary line position. The identification of this boundary line is performed for each fuel electrode layer 98 formed on the porous support body 97.

0149 A position was is identified in the Fig. 11 step S3 first mask-forming step referencing the affixing jig 116, but in the first interconnector-forming step, as a first position identifying step, a position is identified using image analysis based on the positions of each of the fuel electrode layers 98. Therefore the first interconnector layer 102a can be accurately positioned relative to each of the fuel electrode layers 98 irrespective of shrinkage of the porous support body 97 caused by provisional sintering, or changes in the position at which the porous support body 97 is attached. The masking layer 104 for forming the fuel electrode layer 98 is formed to be perpendicular to the rotational center line A of the porous support body 97. Therefore the edge of the fuel electrode layer 98 is formed to be perpendicular to the rotational center line A, so that regardless of the rotational position at which an image of the porous support body 97 is captured, the position of the boundary line between the fuel electrode layer 98 and the porous support body 97 is constant, and the position for forming the first interconnector layer 102a can be uniquely determined. Also, in the present embodiment the porous support body 97 is generally white, and the fuel electrode layer 98 is a pale green, therefore the brightness contrast is high and accurate image analysis can be performed using monochrome image capture. Also, by performing the image analysis based on a monochrome image, the time required for the image analysis can be shortened.

0150 Moreover, in the first interconnector-forming step, a drying step (not shown) for drying the agglomerated slurry is performed after formation of the first interconnector layer 102a film. In the present embodiment, the slurry is dried for approximately 10 minutes at approximately 100°C in the drying step.

0151 Next, in step S8, a provisional sintering step is executed. In the provisional sintering step, the porous support body 97, on which the first interconnector layer 102a film is formed in step S7, is heated by a heating oven (not shown) and provisionally sintered. In this provisional sintering step, the first interconnector layer 102a film formed on each of the fuel electrode layers 98 is cured. In the present embodiment, the first interconnector layer 102a is heated by a heating oven for approximately 2 hours at approximately 1000°C. The color of this provisionally sintered first interconnector layer 102a made of LSTNF is approximately brown.

0152 Next, in step S9, as a second mask-forming step, a mask-forming agent is applied by the extrusion depositing apparatus 140 to the first interconnector layer 102a provisionally sintered in step S8, thus forming the masking layer 106. I.e., the second mask-forming step is an extrusion deposition step whereby continuous extrusion of a mask-forming agent onto the area where the masking layer 106 is to be formed applies the mask-forming agent onto the first interconnector layer 102a to form the masking layer 106. Also, the second mask-forming step is implemented as a liquid application step for applying a mask-forming agent, being a liquid substance, using a dispenser apparatus.

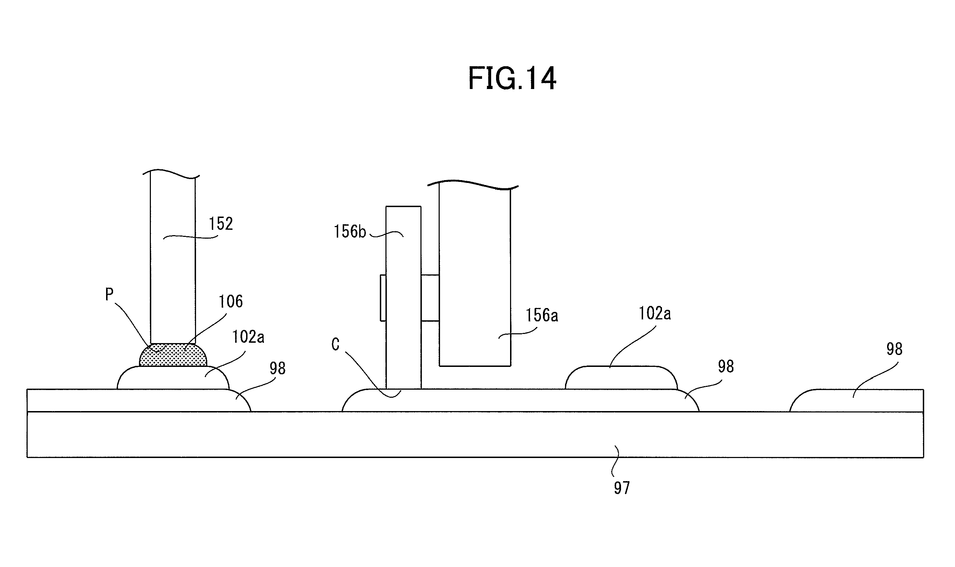

0153 Fig. 14 is a diagram schematically showing the state whereby a masking layer is formed on a first interconnector layer by an extruding deposition apparatus.

As shown in Fig. 14, in the second mask-forming step the mask-forming agent is applied onto the first interconnector layer 102a from the nozzle 152 on the extrusion depositing apparatus 140. Here the first interconnector layer 102a to which the mask-forming agent is applied is formed on a single fuel electrode layer 98, but when performing the application the rotating roller 156b on the extrusion depositing apparatus 140 is brought into contact with the adjacent fuel electrode layer 98. Since each of the fuel electrode layers 98 formed on the porous support body 97 is simultaneously formed in the fuel electrode-forming step, they are formed at the same thickness, and with an extremely smooth surface. Therefore by performing the extrusion film deposition while causing the rotating roller 156b to contact the fuel electrode layer 98, an essentially constant distance can be maintained between the surface on which the mask-forming agent is to be applied (the surface of the first interconnector layer 102a) and the tip of the nozzle 152. Note that in the second mask-forming step the surface on which the mask-forming agent is applied (the surface of the first interconnector layer 102a) is at a higher position than the surface contacted by the rotary roller 156b (the fuel electrode layer 98 surface). Therefore the position of the nozzle 152 tip relative to the rotating roller 156b contact point C is set to be higher than in the first mask-forming step by the amount of this height (the amount of the thickness of the first interconnector layer 102a).

0154 As shown in Fig. 12E, the masking layer 106 is formed to cover the first interconnector layer 102a, leaving the two end portions thereof on the first interconnector layer 102a. Identifying the positions for forming this masking layer 106 is executed as a second position-identifying step by image analysis using the camera 158 on the extrusion depositing apparatus 140. The first interconnector layer 102a is brown, the porous support body 97 is approximately white, and the fuel electrode layer 98 is pale green, therefore the brightness contrast is high and positioning can be accurately determined using the captured image. The mask-forming agent used in the second mask-forming step is the same as the mask-forming agent used in the first mask-forming step.

Next, in step S10, a mask drying step for drying the mask-forming agent applied in the step S9 second mask-forming step is carried out. In the mask drying step, the porous support body 97 to which the mask-forming agent was applied is heated in a drying oven, and solvent in the mask-forming agent is vaporized and removed.

0155 Next, in step S11, as an electrolyte layer-forming step, an electrolyte layer 100, being one of the functional layers on the electricity generating elements 16a, is film-deposited on a porous support body 97 on which the masking layer 106 was formed in step S9. Specifically, in the electrolyte-forming step, which is the second surface deposition step, slurry for forming the electrolyte layer is brought into contact with the porous support body 97 from over the masking layer 106 by the surface deposition apparatus 130, and the electrolyte layer 100 is surface film deposited on parts where no masking layer 106 is present. Therefore in the electrolyte layer-forming step the extrusion depositing apparatus 140 functions as an electrolyte layer-forming apparatus or as a second surface deposition apparatus. Note that the surface deposition apparatus 130 may be the same apparatus as the first surface deposition apparatus used in the fuel electrode layer-forming step in step S5, or a separate dedicated apparatus may be prepared. This electrolyte layer-forming step is an upper layer surface deposition step for depositing a surface film on the surface film-deposited fuel electrode layer 98; each of the electrolyte layers 100 in all of the electricity generating elements 16a formed on a single porous support body 97 is simultaneously surface film deposited.

0156 In the present embodiment the slurry used in the electrolyte layer forming step is a liquid in which LSGM powder is suspended in an alcohol solvent. This slurry is brought into contact with the entirety of the porous support body 97 from above the masking layer 106, but the slurry is repelled by the masking layer 106 and does not agglomerate on the masking layer 106. As a result, as shown in Fig. 12F, the electrolyte layer 100 film is formed only in parts where there is no masking layer 106. I.e., the exposed part of the entirety of the porous support body 97, and the fuel electrode layer 98, and the edge parts on both sides of the first interconnector layer 102a not covered by the masking layer 106, will be covered with the electrolyte layer 100 film.

0157 Also, as shown in Fig. 4, because the edge portion of the fuel electrode layer 98 is formed to be round, the electrolyte layer 100 slurry flows into the boundary portion between the fuel electrode layer 98 and the porous support body 97 without gaps, and the occurrence of gaps underneath the electrolyte layer 100 can the prevented. In addition, the slurry for forming the electrolyte layer 100 is repelled by the masking layer 106 and does not adhere to the masking layer 106, therefore the edge portion thereof is agglomerated in a rounded shape due to surface tension. In the electrolyte layer forming step, the electrolyte layer 100 is formed by surface film deposition, therefore no dot traces are created, and a smooth surface can be obtained. Also, because the electrolyte layer 100 is formed on the surface film-deposited fuel electrode layer 98, there is also no loss of smoothness caused by unevenness in the lower layer surface.

0158 In addition, in the electrolyte layer forming step a drying step (not shown) for drying agglomerated slurry is performed after the electrolyte layer 100 film is formed on the porous support body 97. In the present embodiment, in the drying step the slurry is dried for approximately 5 minutes at approximately 100°C. Note that the masking layer 106 formed on the porous support body 97 continues to be maintained as is even after the drying step.

0159 Next, in step S12, a provisional sintering step is executed. In the provisional sintering step, a porous support body 97, on which an electrolyte layer 100 has been formed in step S11, is heated by a heating oven (not shown) and provisionally sintered. As shown in Fig. 12G, the masking layer 106 formed on the first interconnector layer 102a is vaporized and eliminated by the provisional sintering step. The part of the first interconnector layer 102a which had been covered by the masking layer 106 is thus exposed. In the present embodiment the electrolyte layer 100 is heated by a heating oven for approximately 2 hours at approximately 1000°C and hardened. The color of this provisionally sintered LSGM electrolyte layer 100 is approximately skin-colored.

0160 Next, in step S13, as a second interconnector forming step, a second interconnector layer is formed so as to be electrically connected to the first interconnector layer 102a, which is exposed by provisional sintering in step S12. Specifically, as shown in Fig. 12H, in the second interconnector forming step a second interconnector layer 102b is formed by the dot deposition apparatus 110 so as to cover the exposed first interconnector layer 102a and the edge portion of the electrolyte layer 100 adjacent to this exposed part. I.e., the second interconnector forming step is a dot deposition step for forming a first interconnector layer 102a by forming slurry dots in a predetermined area on the fuel electrode layer 98 by continuously turning slurry for forming the second interconnector layer 102b into liquid droplet form and jetting it onto the area where the second interconnector layer 102b is to be formed, thereby forming the second interconnector layer 102b through the agglomeration of these dots. Therefore in the second interconnector forming step the dot deposition apparatus 110 functions as an interconnector forming apparatus.

0161 Note that in the present embodiment a liquid in which SLT powder is suspended in an alcohol solvent can be used as the slurry for forming the second interconnector layer 102b. Thus in the present embodiment the first interconnector layer 102a and the second interconnector layer 102b are formed of different materials. Moreover, in the second interconnector forming step a drying step (not shown) for drying the agglomerated slurry is performed after film deposition of the second interconnector layer 102b. In the present embodiment the slurry is dried in the drying step for approximately 10 minutes at approximately 100°C. Note that in the second interconnector forming step, determination of the position of the part for forming the second interconnector layer 102b is carried out using image analysis as a third position-determining step. In the third position-determining step, the boundary line is identified by the difference in color between the provisionally sintered first interconnector layer 102a and the electrolyte layer 100.

0162 Next, in step S14, a first provisional sintering step is executed. In the first provisional sintering step, the porous support body 97, fuel electrode layer 98, electrolyte layer 100, first interconnector layer 102a, and second interconnector layer 102b which have been formed until step S13, are heated by a heating oven (not shown) and sintered. The porous support body 97 and each of the functional layers formed thereon are thus integrated into a single body. In the present embodiment heating is achieved by the heating oven in the first sintering step at a temperature of approximately 1300°C for approximately 2 hours. Note that in the present embodiment, after the first sintering step the electrolyte layer 100 is approximately black, and the second interconnector layer 102b is also black, but the end portion of the second interconnector layer 102b overlapping the electrolyte layer 100 is approximately white.

0163 Next, in step S15 as an air electrode forming step, an air electrode layer, being the outermost functional layer, is formed on the electrolyte layer 100 sintered in step S14. Specifically, as shown in Fig. 12I, in the air electrode forming step, which is the outermost layer deposition step, an air electrode layer 101 is formed by the dot deposition apparatus 110 so as to cover the second interconnector layer 102b and a portion of the electrolyte layer 100. I.e., the air electrode forming step is a dot deposition step in which, by turning the slurry for forming the air electrode layer 101 into liquid droplet form and continuously jetting it onto the area where the air electrode layer 101 is to be formed, slurry dots are formed in a predetermined area, forming the air electrode layer 101 by the agglomeration of these dots. Therefore in the air electrode forming step the dot deposition apparatus 110 functions as an air electrode layer forming apparatus.

0164 In the air electrode forming step, as shown in Fig. 4, the feed speed of the dot deposition apparatus 110 is adjusted so that the thickness of the edge portion of the air electrode layer 101 is made thinner than the thickness at the center portion thereof. I.e., at the start of formation of air electrode layer 101, increasing the amount by which the dot deposition apparatus 110 jet dispenser 122 is fed in the axial direction reduces the amount of overlap of formed dots in the axial direction, so that the formed air electrode layer 101 is made thin. Subsequently, the gradual reduction in the amount by which the jet dispenser 122 is fed causes the amount of overlap by formed dots to increase, so that the air electrode layer 101 is thickened. When the formation of one air electrode layer 101 is completed, the amount of overlap in the axial direction is reduced by the gradual increase in the amount by which the jet dispenser 122 is fed in the axial direction, thereby thinning the air electrode layer 101. Thus post-sintering peeling of the air electrode layer 101, which is the outermost functional layer, can be prevented by forming a thin air electrode layer 101 edge portion.

0165 In the present embodiment a liquid in which LSCF powder is suspended in an alcohol solvent can be used as the slurry for forming the air electrode layer 101. Note that in the air electrode forming step, determining the position of the part where the air electrode layer 101 is to be formed is executed using image analysis as a fourth position-determining step. In the fourth position-determining step, the boundary line is identified by the difference in color between the post-first sintering step second interconnector layer 102b and the electrolyte layer 100. In addition, in the air electrode forming step, a drying step (not shown) for drying agglomerated slurry is performed after the air electrode layer 101 film is formed. In the present embodiment the slurry is dried in the drying step for approximately 10 minutes at approximately 100°C.

0166 Next, in step S16, a second provisional sintering step is executed. In the second sintering step, the air electrode layer 101 formed in step S15 is heated by a heating oven (not shown) and sintered. The air electrode layer 101 is thereby integrated as a single body with the electrolyte layer 100 and the second interconnector layer 102b formed on the bottom side thereof. In the present embodiment, heating is performed by the heating oven in a second sintering step at a temperature of approximately 1000°C for approximately 2 hours.

0167 The individual fuel cells 16 of the present embodiment are completed by this second sintering step.

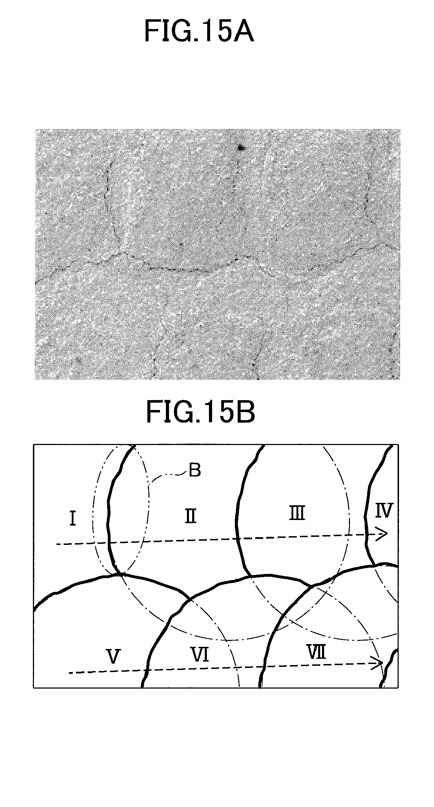

Figs. 15A, 15B are diagrams showing the surface state of an air electrode layer after completion of a second sintering step; Fig. 15A is an expanded photograph of the surface of the air electrode layer 101; Fig. 15B is a schematic diagram of each of the dots forming a part corresponding to the expanded photograph.

0168 As shown in Fig. 15A, fine cracks are formed in positions corresponding to the edges of the dots on the surface of the sintered air electrode layer 101. These fine cracks on the surface occur because the dot film-deposited air electrode layer 101 shrinks in the second sintering step. Here, in the air electrode forming step (step S15), the porous support body 97, formed up through second interconnector layer 102b, is rotated while at the same time liquid droplets of slurry are continuously jetted as the jet dispenser 122 is moved along the guide rail 120. Therefore each of the dots formed by adhesion of the liquid droplets is arrayed so as to describe a spiral, while mutually overlapping in the circumferential and axial directions.

0169 Note that in the present embodiment, a dot formed by a single liquid droplet sprayed out from the jet dispenser 122 is approximately circular with a diameter of approximately 500 µm, and the trace of that dot remains on the surface as appropriate. By forming the air electrode layer 101 in this manner, fine cracks occur in the surface of the air electrode layer 101, resulting in a surface geometry capable of absorbing shrinkage caused by sintering. The diameter of the jet nozzle hole 128a on the jet dispenser 122 and the slurry viscosity, etc. are preferably adjusted so that dots with a diameter of approximately 200 to 1000 µm are formed.

Also, as a variant example, the dot deposition apparatus 110 can be adjusted so that approximately elliptical dots are formed; in this case a length of approximately 200 µm to 1000 µm is desirable for the long axis of the dot. The shape of the dot can be appropriately adjusted using the shape of the jet nozzle hole 128a, the rotational speed (rpm) of the porous support body 97, the liquid droplet jetting interval, and the slurry viscosity, etc. The overlap size can be increased when dots are agglomerated by thus adopting an elliptical shape for each of the slurry dots agglomerated in the air electrode forming step so that the peeling suppression effect is increased. Also, by adopting a length of approximately 200 µm to 1000 µm for the long axis of the ellipse, the effects of thermal expansion by the air electrode layer 101 can be sufficiently absorbed, peeling can be prevented, and the time required to form an air electrode layer can be reduced.

0170 Fig. 15B is a schematic representation of the layout of dots formed in this way. In Fig. 15B, a dot I is first formed; next, while the porous support body 97 is being slightly rotated, a dot II is formed to partially overlap the dot I. Continuing, dot III and dot IV are formed in sequence so as to partially overlap. Thus when the dots are sequentially arrayed and the porous support body 97 has returned to the position of dot I, the jet dispenser 122 is sent to the position of dot V in the axial direction, and dot V partially overlaps with dot I in the axial direction. Continuing, dot VI and dot VII are formed in sequence so as to partially overlap.

0171 Because the dots are arrayed in this manner, the boundary line exposed on the surface of the air electrode layer 101 in dot II, for example, is only the part shown by B in Fig. 15B; other parts of the boundary line are covered by other dots and not exposed on the surface. Therefore even if cracks occur on the exposed boundary line, other parts of the boundary line are held down by other dots, therefore dots do not fall off due to the occurrence of cracking. In addition, by causing fine cracks to occur in the surface of the air electrode layer 101, distortions caused by differential thermal expansion during sintering are distributed, and stresses can be absorbed. Therefore major peeling does not occur in the air electrode layer 101.

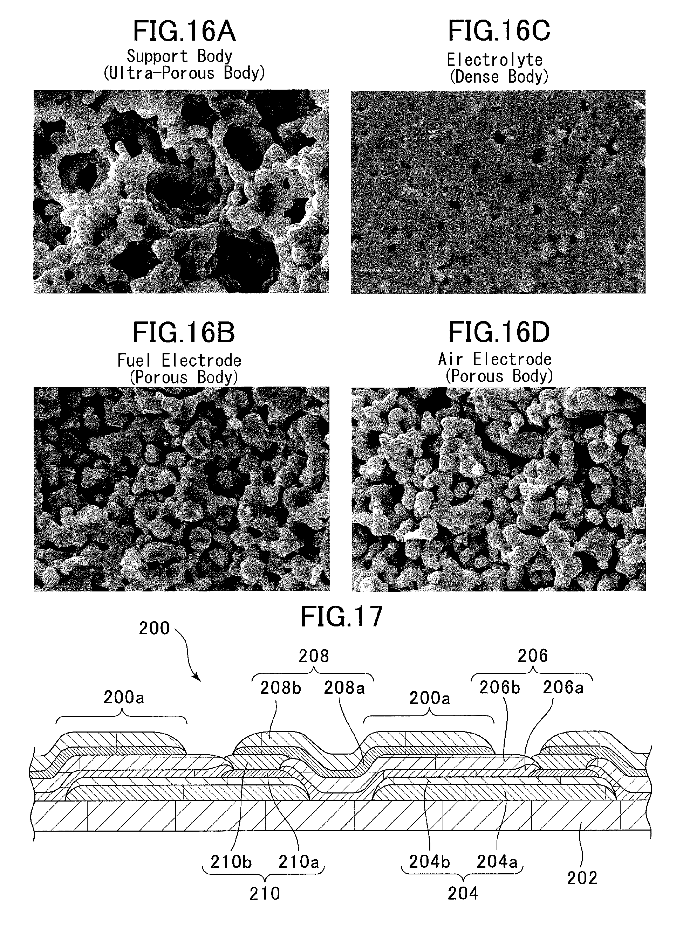

0172 Figs. 16A-16D show electron micrographs of the various parts of an individual fuel cell 16 completed in this way. Fig. 16A shows an electron micrograph of the porous support body 97; Fig. 16B is the fuel electrode layer 98; Fig. 16C is the electrolyte layer 100; Fig. 16D is an electron micrograph of the air electrode layer 101.

0173 As shown in Fig. 16A, the porous support body 97 is constituted to support each of the functional layers; a higher transmissivity to fuel gas is preferred, and an ultra-porous structure is adopted. As shown in Fig. 16B, the fuel electrode layer 98 has the function of passing through hydrogen molecules in the fuel and serving as a conductor for delivering electrical charges produced by the electricity generating reaction, and is thus a porous body with fewer gaps than the porous support body 97. As shown in Fig. 16B, the fuel electrode layer 98 has the function of passing through hydrogen molecules in the fuel and serving as conductor for delivering electrical charges produced by the electricity generating reactions, and is thus a porous body with fewer gaps than the porous support body 97. Also, as shown in Fig. 16C, the electrolyte layer 100 is constituted to produce the electricity generating reaction and to assure airtightness on the fuel electrode side and on the air electrode side.

0174 In Fig. 12I, the part where the fuel electrode layer 98, the electrolyte layer 100, and the air electrode layer 101 are sequentially laminated onto the porous support body 97 functions as an electricity generating element 16a, formed on an individual fuel cell 16. Charges produced by these electricity generating elements 16a are carried through the air electrode layer 101 of the current collecting portion (the part in which only the electrolyte layer 100 and the air electrode layer 101 are laminated onto the porous support body 97) and are connected to the anode in the adjacent electricity generating element 16a through a connecting portion (the part in which the fuel electrode layer 98, the first interconnector layer 102a, the second interconnector layer 102b, the electrolyte layer 100 and the air electrode layer 101 are sequentially laminated onto the porous support body 97). Also, the part in which the second interconnector layer 102b and the air electrode layer 101 are not formed on the electrolyte layer 100 (the part where the electrolyte layer 100 is exposed) functions as an insulating portion for insulating between each of the air electrode layers 101 in adjacent electricity generating elements 16a.

0175 According to the method for manufacturing a solid oxide fuel cell of the first embodiment of the present invention, the film deposition step for forming a functional layer includes both a surface deposition step (steps S5 and S11 in Fig. 11) in which a masking layer is formed in parts not requiring film deposition and slurry is brought into contact to form the fuel electrode layer 98 and electrolyte layer 100 which are the functional layers starting from the top of the masking layer, and a dot deposition step (step S15 in Fig. 9) for forming slurry dots by placing slurry in a liquid droplet state and continuously jetting it, thereby forming the air electrode layer 101, which is a functional layer, by the agglomeration of these dots, therefore fuel cells with a stable performance can be manufactured in a short time even when there are manufacturing errors in the porous support body 97.

0176 Also, using the method for manufacturing the solid oxide fuel cell of the present embodiment, the fuel electrode layer 98 formed adjacent to the porous support body 97 is formed by surface film deposition (step S5 in Fig. 11), therefore the penetration of slurry into the porous support body 97 resulting in unevenness or increased manufacturing time, as occurs with dot film deposition, can be prevented. Also, surface film deposition (steps S5, S11 in Fig. 11) forms masking layers 104, 106 and brings slurry into contact starting from the top of the masking layer, therefore the surface of these functional layers can be formed smoothly without the planarity or linearity, etc. of the porous support body 97 imparting a direct adverse effect on the thickness of the fuel electrode layer 98 and the electrolyte layer 100. Also, because the air electrode layer 101 is formed by dot film deposition adjacent to the electrolyte layer 100 formed by surface film deposition, the positional accuracy of the air electrode layer 101 formed by dot film deposition can be increased, and pulling off or peeling of dots can be prevented.

0177 In addition, using the method for manufacturing the solid oxide fuel cell of the present embodiment the first interconnector layer 102a is formed by dot film deposition (step S7 in Fig. 11), therefore the first interconnector layer 102a can be efficiently formed. I.e., because the surface area of the first interconnector layer 102a is small compared to the fuel electrode layer 98 or the electrolyte layer 100, its implementation using surface film deposition results in more parts where masking is applied, thereby reducing manufacturing efficiency. In addition, a high positional accuracy is required of the interconnector layer 102 providing electrical conductivity between the adjacent fuel electrode layer 98 and the air electrode layer 101, but it is difficult to apply masking so as to leave uncoated the tiny parts requiring this positional accuracy. Positional accuracy can be improved by forming the first interconnector layer 102a using dot film deposition.

0178 Also, according to the method for manufacturing the solid oxide fuel cell of the present embodiment, the fuel electrode layer 98 adjacent to the porous support body 97 and the electrolyte layer 100 adjacent thereto are formed in a surface deposition step (steps S5, S11 in Fig. 11), therefore the fuel electrode layer 98 smoothness is high, and no adverse effect is imparted to the electrolyte layer 100. Also, because the fuel electrode layer 98 and the electrolyte layer 100 adjacent to the porous support body 97 has a broad surface area, the surface area of the masking layers 104, 106 required for surface film deposition can be made small, and fuel cells can be efficiently manufactured.

0179 In addition, according to the method for manufacturing a solid upside fuel cell of the present embodiment, the second interconnector layer 102b connected to the first interconnector layer 102a is formed by dot film deposition (steps S7, S13 in Fig. 11), therefore the first interconnector layer 102a, for which high positional precision is required, can be efficiently manufactured in a small surface area.

0180 Also, according to the method for manufacturing the solid oxide fuel cell of the present embodiment, a provisional sintering step (step S12 in Fig. 11) is implemented after the electrolyte layer 100 is surface film deposited, therefore adhesion force is increased by a small amount of shrinkage, and peeling or cracking of the electrolyte layer 100 can be prevented. For this reason, a favorable electrolyte layer 100 can be efficiently manufactured by surface film deposition rather than screen printing or dot film deposition.

0181 In the solid oxide fuel cell manufacturing method of the first embodiment of the present invention, the fuel electrode layer 98 formed immediately above the porous support body 97 is formed by surface film deposition (step S5 in Fig. 11), and the interconnect layer 102 and air electrode layer 101 formed over that are formed by the agglomeration of slurry dots (steps S7, S13, S15 in Fig. 11). Therefore because a bottom-most fuel electrode layer 98 is formed by surface film deposition, a highly smooth fuel electrode layer 98 can be formed, and adverse effects to the electrolyte layer 100, etc. on layers above it can be suppressed. On the other hand when the fuel electrode layer 98 is formed by the agglomeration of dots, the smoothness of the fuel electrode layer 98 surface is low, therefore when reducing the fuel electrode layer 98 there is a risk of adverse effects on the functional layers laminated onto the fuel electrode layer 98. When the fuel electrode layer 98 is reduced, the volume decreases due to the loss of oxygen from within the layer, and when the smoothness of the fuel electrode layer 98 is low, major shape deformations occur in the layer surface, resulting in peeling and the like between these layers and the densely formed electrolyte layer 100.

0182 Moreover, according to the method for manufacturing the solid oxide fuel cell of the present embodiment, the interconnect layer 102 is formed by the agglomeration of dots, therefore the interconnect layer 102 can be easily formed to be compact and with a high dimensional precision and positional precision, even if the dimensional precision of the porous support body 97 is low. Also, because the interconnector 102 is compact, film deposition does not require greatly prolonged times even when formed by dot agglomeration, and manufacturing efficiency is not reduced. Furthermore, according to the present embodiment the air electrode layer 101 is also formed by dot agglomeration, and can therefore be formed with a high dimensional and positional accuracy. Also, because no reduction is performed on the air electrode layer 101, no adverse effect is created by shape deformation, even when formed by dot agglomeration with low surface smoothness.

0183 Thus according to the present embodiment the bottom-most layer 98 and the interconnector 102 and air electrode layer 101 formed above that are respectively formed by an appropriate film deposition method, therefore multiple compact electricity generating elements 16a can be formed on a single porous support body 97, and the adverse effects of reduction processing can be avoided even when the dimensional accuracy of the porous support body 97 is low.

0184 Also, according to the method of manufacturing the solid oxide fuel cell of the present embodiment, the porous support body 97 is formed of an insulating material, therefore the fuel electrode layers 98 on each of the electricity generating elements 16a are insulated from one another by being respectively separately formed on the porous support body 97. Here, when a fuel electrode layer 98 is formed by dot agglomeration, slurry will penetrate into the porous support body 97 if the viscosity of the jetted slurry is low, producing a risk of shorting between fuel electrode layers 98 formed apart from one another. If the viscosity of jetted slurry is made high, slurry penetration can be avoided, but each individual formed dot will be small, therefore the time required for dot film deposition will be extended, and manufacturing efficiency will be extraordinarily reduced. According to the present embodiment, the fuel electrode layer 98 is formed by surface film deposition (step S5 in Fig. 11), therefore the viscosity of the slurry used to form the fuel electrode layer 98 can be raised and the fuel electrode layer 98 efficiently formed while preventing the penetration of slurry into the porous support body 97.

0185 Using the method for manufacturing a solid oxide fuel cell of the first embodiment of the present invention, the masking layer 104 is formed on parts not requiring film deposition of the fuel electrode layer 98 on the porous support body 97 (Fig. 12A). Mask-forming agent adhered for the purpose of forming this masking layer 104 is constituted to penetrate into the porous support body 97, therefore slurry made to adhere during surface film deposition in the fuel electrode layer-forming step (step S5 in Fig. 11; Fig. 12B) can be prevented from penetrating into the porous support body 97 and shorting inside the porous support body 97. As a result, according to the present embodiment shorting between adjacent fuel electrode layers 98 can be prevented even when the spacing between electricity generating elements 16a is designed to be narrow, therefore the degree of concentration of the electricity generating elements 16a can be improved. Also, according to the present embodiment the masking layer 104 is water-repellent or oil-repellent so as to repel slurry, therefore adjacent fuel electrode layers 98 across the masking layer 104 can be prevented from shorting even if the electricity generating element 16a spacing is narrow, i.e., even if the width of the masking layer 104 is designed to be narrow. I.e., the masking layer 104 repels slurry adhering in the surface deposition step, which is the fuel electrode layer-forming step, so the agglomeration on the masking layer 104 of slurry made to adhere during surface film deposition and the resulting shorting of adjacent fuel electrode layers 98 can be prevented. Furthermore, the fuel electrode layer 98 formed on the porous support body 97 is formed by surface film deposition, therefore film deposition on a broad surface area can be accomplished in a short time, and a smooth surface fuel electrode layer 98 can be formed, with no adverse effects on the other electrolyte layers 100 or air electrode layers 101 laminated on this fuel electrode layer 98.

0186 Also, according to the method of manufacturing the solid oxide fuel cell of the present embodiment, mask-forming agent is applied in predetermined positions using the extrusion depositing apparatus 140, therefore the masking layer 104 can be simply and accurately formed on the porous support body 97.

0187 In addition, according to the method of manufacturing the solid oxide fuel cell of the present embodiment, the masking layer 104 disappears in the provisional sintering step (step S6 in Fig. 11), so the masking layer 104 can be removed without additional steps. Also, the masking layer 104 is removed by incineration, therefore mask-forming agent which has penetrated into the porous support body 97 can also be simply and reliably removed.

0188 According to the method of manufacturing a solid oxide fuel cell of the first embodiment of the present invention, the fuel electrode layer 98, which is a first functional layer, is first formed by surface film deposition (step S5 in Fig. 11), therefore a fuel electrode layer 98 with a broad surface area can be formed in a short time, and a smooth surface fuel electrode layer 98 can be formed. In addition, because the second mask-forming step (step S9 in Fig. 11), which is a liquid application step, is implemented by the extrusion depositing apparatus 140 with the rotating roller 156b placed in contact with the smooth fuel electrode layer 98 formed by surface film deposition (Fig. 14), the distance between the tip of the nozzle 152 and the surface to be coated can be set with good precision, and extrusion film deposition can be executed precisely.

0189 Also, according to the method of manufacturing the solid oxide fuel cell of the present embodiment, a mask-forming agent is applied onto an adjacent separate fuel electrode layer 98 while the rotating roller 156b is placed in contact with the fuel electrode layer 98, therefore the electricity generating elements 16a can be made compact and the agglomeration of the electricity generating elements 16a increased irrespective of the distance S between the rotating roller 156b and the nozzle 152.

0190 Furthermore, according to the method of manufacturing the solid oxide fuel cell of the present embodiment, the first interconnector layer 102a is formed by dot film deposition on the fuel electrode layer 98 (step 7 in Fig. 11), therefore a compact first interconnector layer 102a can be precisely formed. Also, a second mask-forming step (step S9 in Fig. 11) for forming the masking layer 106 by applying mask-forming agent on the first interconnector layer 102a is implemented as a liquid application step; this second mask-forming step is carried out with the extrusion depositing apparatus 140 nozzle drive apparatus 156 placed in contact with a smooth fuel electrode layer 98. Therefore the masking layer 106 can be precisely formed on the first interconnector layer 102a, which has a lower smoothness than the fuel electrode layer 98, while the nozzle 152 tip P is made to follow the surface of the high surface-smoothness fuel electrode layer 98.

0191 Also, according to the method of manufacturing the solid oxide fuel cell of the present embodiment, because the masking layer 106 is formed on the densely structured first interconnector layer 102a, it can be formed in a shorter time than when formed on the porous support body 97, even when the viscosity of the mask-forming agent is low, and because the masking layer 106 is formed by surface film deposition, it can be formed in a shorter time. Also, since the formed masking layer 106 disappears due to the provisional sintering step (step S12 in Fig. 11), which provisionally sinters the electrolyte layer 100, there is no need to provide a special steps for removing the masking layer 106, and solid oxide fuel cells 16 can be manufactured in a shorter time.

0192 The dispenser apparatus for manufacturing the solid oxide fuel cell of the first embodiment of the present invention comprises a nozzle drive apparatus 156 for driving the nozzle 152 so that the distance between the surface on which the mask-forming agent, a liquid substance, is to be applied, and the tip of the nozzle 152, is held essentially constant, therefore a high precision layer can be formed, and concentration of the electricity generating elements 16a can be raised, even when the dimensional precision and shape precision of the porous support body 97 are low.

0193 Also, using the dispenser apparatus for manufacturing the solid oxide fuel cell of the first embodiment of the present invention, the nozzle 152 is driven in the direction in which the mask-forming agent is discharged, therefore the distance between the surface and the nozzle 152 can be maintained essentially constant without interfering with the movement of the nozzle 152, which scans relative to the surface on which mask-forming agent is to be coated.

0194 In addition, using the extrusion depositing apparatus 140, which is a dispenser apparatus for manufacturing the solid oxide fuel cell of the present embodiment, mask-forming agent is made into a rod shape and continuously extruded from the nozzle 152, so that compared to dot film deposition for agglomerating liquid substance dots placed in a liquid droplet form, more liquid substance can be applied per unit time. Therefore even if the viscosity of the applied liquid substance is lowered, film deposition can be efficiently conducted without an extraordinary increase in film deposition time. Also, a deposited film made by continuous extrusion of a mask-forming agent made into a rod shape is more affected by changes in the distance between the nozzle 152 tip and the surface on which the mask-forming agent is to be applied than with dot film deposition. However, in the extrusion deposition apparatus of the present embodiment, the nozzle drive apparatus 156 drives the nozzle 152 so that the distance between the surface on which the liquid substance is to be applied and the nozzle 152 tip is held approximately constant, therefore film deposition can be performed with good precision and efficiency even by extruded film deposition.

0195 Using the extrusion depositing apparatus 140, which is a dispenser apparatus for manufacturing the solid oxide fuel cell of the present embodiment, the distance D between the nozzle 152 tip and the surface is mechanically adjusted by the rotating roller 156b brought into contact with the surface to which the mask-forming agent is to be applied and by the nozzle 152 which moves in tandem therewith (Fig. 10), therefore a rapid response can be achieved with a simple configuration. Also, the tank 154 which holds the mask-forming agent does not move in tandem with the movement of the rotating roller 156b, therefore the weight of the tank 154 has no effect on the operation of the nozzle drive apparatus 156. I.e., when the rotating roller 156b in contact with the surface is mechanically linked with the tank 154, a fast response becomes difficult due to the effect of the tank 154 weight on movement of the rotating roller 156b, and there is a risk that because the force pressing on the rotating roller 156b increases, the load acting on the porous support body 97 will be excessive.

0196 Moreover, using the extrusion depositing apparatus 140, which is a dispenser apparatus for manufacturing the solid oxide fuel cell of the present embodiment, the rotating roller 156b is separated from the porous support body 97 while it is being moved in the direction of the rotational center line A of the porous support body 97, therefore during this period scraping by the rotating roller 156b of the surface to which the mask-forming agent is to be applied, and surface damage or damage to the porous support body 97, can be prevented.

0197 Also, using the extrusion depositing apparatus 140, which is a dispenser apparatus for manufacturing the solid oxide fuel cell of the present embodiment, the rotating roller 156b is provided on only one side of the nozzle 152, therefore compared to the case where rotating rollers 156b are provided on both sides thereof, the nozzle drive apparatus 156 can be made lightweight, and the load placed on the porous support body 97 can be reduced. In addition, when rotating rollers are placed on both sides, there are some cases in which the nozzle moves in a discontinuous manner when transitioning from a state in which one of the rotating rollers is contacting the surface to one in which the other rotating roller is contacting the surface, but by placing the rotating roller on only one side, this type of problem can be avoided.

0198 In addition, using the extrusion depositing apparatus 140, which is a dispenser apparatus for manufacturing the solid oxide fuel cell of the present embodiment, the straight line connecting the rotating roller 156b contact point C with the nozzle 152 tip P is oriented essentially parallel to the rotational center line A of the porous support body 97, therefore the tip of the nozzle 152 can be made to follow the surface to which mask-forming agent is to be applied in an essentially accurate manner, even if the contact point C and the nozzle 152 tip P are separated.

0199 Also, using the extrusion depositing apparatus 140, which is a dispenser apparatus for manufacturing the solid oxide fuel cell of the present embodiment, the straight line connecting the rotating roller 156b contact point C and the nozzle 152 tip P is positioned essentially perpendicularly above the rotational center line A of the porous support body 97, therefore the plane contacting the surface to which mask-forming agent is to be applied and the nozzle 152 are in a perpendicular positional relationship, and the position of the tip of the nozzle 152 can be set to a position closely adjacent to the surface.

0200 Furthermore, using the extrusion depositing apparatus 140, which is a dispenser apparatus for manufacturing the solid oxide fuel cell of the present embodiment, the distance S between the contact point C and the nozzle 152 tip P is set to 10 mm, therefore the nozzle 152 tip can be made to follow with sufficient precision relative to the generally anticipated level of shape error in the porous support body 97.

0201 In the above-described manufacturing method of the first embodiment of the invention the extrusion depositing apparatus 140 and the dot deposition apparatus 110 were used as dispenser apparatuses, and the extrusion depositing apparatus 140 was used for the first and second mask-forming steps (steps S3, S9 in Fig. 11; Figs. 12A, 12E), but as a variant example, the dot deposition apparatus 110 could be used for these steps. In addition, in the method of manufacturing the above-described first embodiment of the invention the dot deposition apparatus 110 was used for the first and second interconnector-forming steps and for the air electrode layer-forming step (steps S7, S13, S15 in Fig. 11; Figs. 12D, 12H, 12I), but as a variant example the extrusion depositing apparatus 140 can also be used.

Note that it is desirable to select a mask-forming agent so that the formed masking layer 104 repels slurry in the fuel electrode layer-forming step, which is the first surface deposition step (step S5 in Fig. 11; Fig. 12B).

0202 Next, referring to Fig. 17, we explain an individual solid oxide fuel cell according to a second embodiment of the invention.

An individual fuel cell according to a second embodiment of the invention differs from the above-described first embodiment in that each of the three functional layers, being the fuel electrode layer, the electrolyte layer, and the air electrode layer, is respectively formed of two layers. Therefore here we explain only the aspects of the second embodiment of the invention different from the first embodiment of the invention, and we omit an explanation of similar constitutions, operations, and effects.

0203 Fig. 17 is a cross-section showing an expanded view of a functional layer formed on the surface of a porous support body in an individual fuel cell according to a second embodiment of the invention.

As shown in Fig. 17, the individual fuel cells 200 of the present embodiment have a cylindrical porous support body 202 and three functional layers formed thereon, being a fuel electrode layer 204, an electrolyte layer 206, and an air electrode layer 208. Formed on the individual fuel cells 200 are multiple electricity generating elements 200a, formed by placement in sequence of a fuel electrode layer 204, an electrolyte layer 206, and an air electrode layer 208 on a porous support body 202. Each of these electricity generating elements 200a is electrically connected in series by the interconnector layer 210. In the present embodiment, twelve electricity generating elements 200a are formed on a single individual fuel cell 200, and these are connected by the interconnector layer 210.

0204 Next we explain the constitution of the porous support body 202 and each of the functional layers.

In the present embodiment, as in the first embodiment, the porous support body 202 is formed by extruding a cylindrical mixture using forsterite as its main component, with a binder added, then sintering this extrusion.

In the present embodiment, the fuel electrode layer 204 is formed of two layers, being a bottom fuel electrode layer 204a and a top fuel electrode layer 204b formed thereon. Of these two layers, the bottom fuel electrode layer 204a, like the first embodiment, is a semiconductor thin film comprised of a blend of NiO powder and 10YSZ (10 mol% Y2O₃ -- 90 mol% ZrO₂) powder. On the other hand, the top fuel electrode layer 204b is a semiconductor thin film comprising a blend of NiO powder and GDC (10 mol% Gd₂O₃ - 90 mol% CeO₂) powder.

0205 Here the fuel electrode layer generally must comprise a catalyst function for causing the reaction between hydrogen and oxygen ions, and a function for carrying charges (electrons) produced by the reaction. In the individual fuel cell 200 of the present embodiment, the bottom fuel electrode layer 204a is constituted by a material with higher electrical conductivity than the top fuel electrode layer 204b, while on the other hand the top fuel electrode layer 204b is formed of a material with higher catalytic activity than the bottom fuel electrode layer 204a. Thus charges produced in the top fuel electrode layer 204b directly beneath the electrolyte layer 206 can be efficiently carried by the bottom fuel electrode layer 204a, and a high performance fuel electrode layer 204 can be constituted.

0206 In the present embodiment, the solid electrolyte layer 206 comprises a bottom electrolyte layer 206a, and a top electrolyte layer 206b formed on top thereof. Of these two layers, the bottom electrolyte layer 206a is a thin film comprising a cerium composite oxide (LDC400; i.e. 40 mol% La₂O₃ - 60 mol% CeO₂) powder or the like. On the other hand the top electrolyte layer 206b, like the first embodiment, is a thin film comprising an LSGM powder composed of La_{0.9}Sr_{0.1}Ga_{0.1}Mg_{0.2}O₃.

0207 The bottom electrolyte layer 206a functions as a reaction-suppressing layer; chemical reaction between the top fuel electrode layer 204b and the top electrolyte layer 206b is suppressed by the bottom electrolyte layer 206a.

The top electrolyte layer 206b, like the electrolyte layer in the first embodiment, produces electrical energy by mediating the reaction of an oxide ion with hydrogen or carbon monoxide.

0208 In the present embodiment, an air electrode layer 208 comprises a bottom air electrode layer 208a and a top air electrode layer 208b formed thereon. Of these two layers, the bottom air electrode layer 208a is a semiconductor thin film comprised of an LSCF powder with an La_{0.6}Sr_{0.4}Co_{0.2}Fe_{0.2}0₃ composition.

0209 Here the air electrode layer generally must comprise a catalytic function for ionizing oxygen in air, and a function for carrying charges for the oxygen to react with. In the individual fuel cell 200, the bottom air electrode layer 208a is constituted of a material with a higher catalytic activity than the top air electrode layer 208b (a material with a high oxygen ion exchange performance), while on the other hand the top air electrode layer 208b is formed of a material with a higher electron conductivity than the bottom air electrode layer 208a. Thus oxygen can be efficiently ionized in the bottom air electrode layer 208a adjacent to the electrolyte layer 206 using electrons transported by the top air electrode layer 208b, thereby constituting a high performance air electrode layer 208.

0210 The interconnect layer 210, like the first embodiment, comprises a first interconnector layer 210a and a second interconnector layer 210b disposed thereon.

0211 We explain a method for manufacturing an individual fuel cell according to a second embodiment of the invention.

Here we explain only those points which differ from the manufacturing process of the first embodiment described using Fig. 11.

First, steps S1-S4 in Fig. 11 are the same as the first embodiment.

0212 Next, in the first embodiment, in step S5 of Fig. 11, agglomerated slurry is dried in a drying step after surface film deposition of a fuel electrode layer by the surface deposition apparatus 130. In the second embodiment, first the bottom fuel electrode layer 204a is film deposited by the surface deposition apparatus 130 and dried by the drying step, then the top fuel electrode layer 204b is film deposited by the surface deposition apparatus 130 and dried. This results in the formation of a bottom fuel electrode layer 204a in parts where no masking layer is formed on the porous support body 202, and in the formation of a top fuel electrode layer 204b on this bottom fuel electrode layer 204a.

0213 Here the viscosity of the slurry used to form the bottom fuel electrode layer 204a is made higher than the viscosity of the slurry used to form the top fuel electrode layer 204b. I.e., excessive penetration of slurry into the porous support body 202 can be prevented by increasing the viscosity of the slurry used for the bottom fuel electrode layer 204a, which is directly deposited on the porous support body 202. Also, reducing the viscosity of the slurry used for the top fuel electrode layer 204b enables the agglomerated slurry to spread easily so that the smoothness of the surface of the agglomerated top fuel electrode layer 204b can be increased. Note that the viscosity of the slurry can be appropriately set based on the material powder constituting the fuel electrode layer, the ratio of the solvent in which this is suspended, the grain size of the suspended powder, the type of solvent use for the suspension, etc.

0214 If the top fuel electrode layer 204b degree of smoothness is low and layer thickness is non-uniform, the electricity generating reaction occurring in the fuel electrode layer will be non-uniform in each of the parts on the fuel electrode layer. When the electricity generating reaction is non-uniform, current concentrates in parts where the electricity generating reaction is strong, and the electricity generating effect in the individual fuel cell 200 becomes unstable. This type of current concentration can be suppressed using the present embodiment. Furthermore, negative effects on the smoothness of the electrolyte layer 206 and air electrode layer 208 agglomerated on the fuel electrode layer 204 can be prevented by increasing the smoothness of the top fuel electrode layer 204b surface.

0215 In addition, steps S6-S10 in Fig. 11 are the same as the first embodiment.

Next, in the first embodiment, in step S11 of Fig. 11, agglomerated slurry is dried in a drying step after surface film deposition of an electrolyte layer by the surface deposition apparatus 130. In the second embodiment, first the bottom electrolyte layer 206a is film deposited by the surface deposition apparatus 130 and dried by the drying step, then the top electrolyte layer 206b is film deposited by the surface deposition apparatus 130 and dried. A bottom electrolyte layer 206a is thus formed in parts where no masking layer is formed on the first interconnector layer 210a, and a top electrolyte layer 206b is formed on this bottom electrolyte layer 206a.

0216 Furthermore, steps S12-S14 in Fig. 11 are the same as the first embodiment.

Next, in the first embodiment, in step S15 of Fig. 11, agglomerated slurry is dried in a drying step after surface film deposition of an air electrode layer by the dot deposition apparatus 110. In the second embodiment a bottom air electrode layer 208a is first deposited by the dot deposition apparatus 110 and dried by a drying step, then the top air electrode layer 208b is again deposited by the dot deposition apparatus 110 and dried. In this manner, a bottom air electrode layer 208a and top air electrode layer 208b are formed so as to cover part of the second interconnector layer 210b and the top electrolyte layer 206b.

0217 Here, the viscosity of the slurry used to form the bottom air electrode layer 208a is made lower than the viscosity of the slurry used to form the top air electrode layer 208b. I.e., by reducing the viscosity of the slurry used for the bottom air electrode layer 208a, liquid droplets of slurry adhering to the top electrolyte layer 206b which were jetted by the jet dispenser 122 spread out thinly, so that a smooth bottom air electrode layer 208a can be formed with a low tendency for dot traces to remain. On the other hand, by increasing the viscosity of slurry used for the top air electrode layer 208b, the liquid droplets of jetted slurry adhering to the bottom air electrode layer 208a do not spread very much, and the top air electrode layer 208b formed as a result is made thicker. Thus by constituting a smooth bottom air electrode layer 208a with a high catalytic activity, the catalytic reaction in the air electrode layer can be made uniform, and current concentration caused by non-uniformity of the catalytic reaction can be suppressed. Also, the top air electrode layer 208b is formed to be thick, therefore the electrical resistance of the air electrode layer can be reduced and the top air electrode layer 208b, being the outermost layer most subject to peeling, can be strengthened.

Finally, a solid oxide fuel cell 200 of the present embodiment is completed using the second sintering step in step S16 of Fig. 11, which is the same as the first embodiment.

0218 Using the method of manufacturing the solid oxide fuel cell of the second embodiment of the present invention, the bottom layer fuel electrode layer 204a formed on the porous support body 202 is formed of a high viscosity slurry, therefore penetration of slurry into the porous support body 202 can be prevented, and shorting between each of the fuel electrode layers 204 can be reliably prevented. Also, because the top layer fuel electrode layer 204b is formed of a low viscosity slurry, the surface of the fuel electrode layer 204 can be formed more smoothly, and adverse effects to the electrolyte layer 206 formed thereon can be extremely reduced.

0219 Using the method of manufacturing the solid oxide fuel cell of the present embodiment, the top layer fuel electrode layer 204b is formed using a high catalytic activity material, therefore an electricity generating reaction can be efficiently induced at the boundary with the electrolyte layer 206, and the bottom layer fuel electrode layer 204a is formed of a high conductivity material, so charges produced by the electricity generating reaction can be transported with low loss.

0220 Moreover, using the method of manufacturing the solid oxide fuel cell of the present embodiment, the bottom layer air electrode layer 208a is formed by the agglomeration of low viscosity slurry dots, so the bottom layer air electrode layer 208a surface can be made relatively smooth, and transmissivity to oxygen ions can be made uniform in each part. On the other hand, the top layer air electrode layer 208b is formed by dot agglomeration, so the top layer air electrode layer 208b can be thickly formed, and the air electrode layer 208 strength increased. This enables the formation of an air electrode layer 208 with stable performance and high strength.

0221 Using the method of manufacturing the solid oxide fuel cell of the present embodiment, the bottom layer air electrode layer 208a is formed of a high catalytic activity material to be relatively smooth, so oxygen ions can be produced uniformly in each part of the air electrode layer 208, and a stable electricity generating reaction can be produced. Also, since the top layer air electrode layer 208b is formed of a high conductivity (electron conductivity) material, charges can be transported with low loss in each part within the air electrode layer 208.

0222 We have described above a preferred embodiment of the present invention, but various changes may be added to the above-described embodiments. In particular, in the above-described embodiment, using the surface deposition apparatus shown in Fig. 7 slurry was made, by spraying from below, to contact a porous support body to which masking had been applied and surface film deposition applied, but as a variant example, slurry may be brought into contact from various directions. For example, slurry can be brought into contact by causing it to flow downward from above a porous support body to which masking has been applied. Or, slurry can be brought into contact by misting the slurry onto a porous support body to which masking has been applied. Furthermore, slurry can be brought into contact by soaking a porous support body to which masking has been applied in a tank containing slurry.

0223 In the above-described embodiment, functional layers were laminated onto a porous support body in the sequence of fuel electrode layer, electrolyte layer, and air electrode layer, but it is also possible to form the functional layers in the sequence of air electrode layer, electrolyte layer, and fuel electrode layer. In a solid oxide fuel cell thus constituted, electricity is generated by causing air to flow into the inside of the porous support body, and flowing gas to the outside thereof.

Moreover, in the embodiment described above the porous support body was cylindrical, but the present invention may be applied to solid oxide fuel cells of various forms such as oval and flat shapes.

0224 In addition, in the above-described embodiment the extrusion depositing apparatus was equipped with a mechanical nozzle drive apparatus provided with a rotating roller, but the nozzle drive apparatus may also be electrically driven. In that case the nozzle drive apparatus could also be constituted so that, for example, positions on the surface to which the liquid substance is to be applied are measured with laser light or the like, and based on this a control is executed to keep the distance between the surface and the nozzle tip essentially constant.

Also, no nozzle drive apparatus is provided on the dot deposition apparatus in the above-described embodiment, but it is also possible to provide a nozzle drive apparatus on the dot deposition apparatus and control the distance to be essentially constant between the tip of the nozzle for jetting liquid droplets and the surface on which dots are formed.

### Explanation of Reference Numerals

0225
- 1:: solid oxide fuel cell system
- 2:: fuel cell module
- 4:: auxiliary unit
- 6:: housing
- 8:: fuel cell housing container
- 10:: generating chamber
- 16:: fuel cells in an embodiment of the present invention (solid oxide fuel cells)
- 16a:: electricity generating elements
- 18:: exhaust collection chamber
- 20:: fuel gas supply flow path
- 21:: exhaust gas discharge flow path
- 22:: oxidant gas supply flow path
- 24:: water supply source
- 26:: pure water tank
- 28:: water flow regulator unit
- 30:: fuel supply source
- 34:: heat exchanger
- 35:: electromagnetic valve
- 36:: desulfurizer
- 38:: fuel blower
- 40:: air supply source
- 45:: air flow regulator unit
- 50:: hot water producing device
- 54:: inverter
- 56:: oxidant gas introducing pipe
- 58:: exhaust gas discharge pipe
- 60:: combustion catalyst
- 61:: sheath heater
- 62:: ignition heater
- 63:: first affixing member
- 64:: inside cylindrical member
- 64b:: small hole
- 65:: intermediate cylindrical member
- 66:: outside cylindrical member
- 68:: inside cylindrical container
- 70:: outside cylindrical container
- 72:: dispersion chamber bottom member
- 72a:: insertion pipe
- 74:: oxidant gas injection pipe
- 76:: combustion gas dispersion chamber
- 80:: bus bars
- 82:: current collector
- 86:: vaporizing section
- 86a:: angled plate
- 88:: water supply pipe
- 90:: fuel gas supply pipe
- 92:: fuel gas supply flow path partition
- 92a:: injection ports
- 94:: reforming portion
- 96:: reforming catalyst
- 97:: porous support body
- 98:: fuel electrode layer
- 100:: electrolyte layer
- 101:: air electrode layer
- 102:: interconnect layer
- 102a:: first interconnect layer
- 102b:: second interconnect layer
- 104:: masking layer
- 106:: masking layer
- 110:: dot deposition apparatus
- 112:: pedestal
- 114:: motor
- 116:: affixing jig (rotary support apparatus)
- 116a:: centering rods
- 118:: head portion
- 120:: guide rail
- 122:: jet dispenser
- 124:: slurry vessel
- 126:: camera
- 128:: nozzle portion
- 128a:: jet nozzle hole
- 128b:: indentation
- 128c:: slurry supply pathway
- 129:: jet actuator
- 129b:: flexible plate
- 129b:: projecting portion
- 130:: surface deposition apparatus
- 131:: base
- 132:: affixing jig (rotary support apparatus)
- 134:: motor
- 136:: surface deposition nozzle
- 138:: pump
- 139:: slurry vessel
- 140:: extrusion depositing apparatus (dispenser apparatus)
- 142:: pedestal
- 144:: motor
- 146:: affixing jig (rotary support apparatus)
- 146a:: centering rods
- 148:: head portion
- 150:: guide rail
- 152:: nozzle
- 154:: tank
- 154a:: pipe
- 156:: nozzle drive apparatus
- 156a:: arm portion
- 156b:: rotating roller
- 158:: camera
- 200:: fuel cell of the second embodiment of the invention (solid oxide fuel cell)
- 200a:: electricity generating element
- 202:: porous support body
- 204:: fuel electrode layer
- 204a:: bottom layer fuel electrode layer
- 204b:: top layer fuel electrode layer
- 206:: electrolyte layer
- 206a:: bottom layer electrolyte layer
- 206b:: top layer electrolyte layer
- 208:: air electrode layer
- 208a:: bottom layer air electrode layer
- 208b:: top layer air electrode layer
- 210:: interconnect layer
- 210a:: first interconnect layer
- 210b:: second interconnect layer

## Claims

1. A method for manufacturing a solid oxide fuel cell in which multiple electricity generating elements are formed on a porous support body and the electricity generating elements are connected by an interconnector, the method comprising steps of:
a support body-forming step for forming the porous support body;
a film deposition step for laminating and forming, in a predetermined sequence, a fuel electrode layer, an electrolyte layer, and an air electrode layer, being functional layers constituting the multiple electricity generating elements, onto the porous support body; and
a sintering step for heating and sintering the porous support body on which the functional layers are formed by the film deposition step;
wherein the film deposition step includes:
a surface deposition step in which masking layers are formed on parts not requiring the film deposition, and slurry for forming first functional layers of the functional layers is brought into contact from over the masking layers in order to simultaneously form the first functional layers of the multiple electricity generating elements in parts with no masking layers, and;
a dot deposition step for forming slurry dots by turning slurry for forming second functional layers among the functional layers into liquid droplet form and continuously jetting the dots onto the area in which the second functional layers are to be formed, thereby forming the second functional layers by the agglomeration of the dots.

2. The method of manufacturing a solid oxide fuel cell of Claim 1, wherein one kind of the functional layers formed adjacent to the porous support body is formed by the surface deposition step, and the other kind of the functional layers formed by the dot deposition step is formed adjacent to the functional layer formed by the surface deposition step.

3. The method of manufacturing a solid oxide fuel cell of Claim 2, further comprising a first interconnector-forming step in which slurry dots are formed by making slurry into liquid droplet form and continuously jetting the slurry to form the interconnector so as to be connected to the functional layer formed adjacent to the porous support body, thus forming a first interconnector layer by the agglomeration of the dots.

4. The method of manufacturing a solid oxide fuel cell of Claim 3, wherein the electrolyte layer is formed by the surface deposition step, adjacent to the functional layer formed adjacent to the porous support body.

5. The method of manufacturing a solid oxide fuel cell of Claim 4, further comprising a second interconnector forming step wherein, following the surface deposition step for forming the electrolyte layer, a second interconnector layer, connected to the first interconnector layer formed in the first interconnector-forming step, is formed by agglomeration of the dots.

6. The method of manufacturing a solid oxide fuel cell of Claim 5, further comprising a provisional sintering step for heating and curing the electrolyte layer, wherein the provisional sintering step is performed following the surface deposition step for forming the electrolyte layer, and prior to the second interconnector-forming step.

7. The method of manufacturing a solid oxide fuel cell of Claim 3, wherein the surface deposition step is carried out as a fuel electrode-forming step for simultaneously forming the multiple fuel electrode layers by causing slurry used to form the fuel electrode layer to adhere to the porous support body, and the porous support body is formed of an insulating material, with the multiple fuel electrode layers insulated from one another;
wherein the first interconnector-forming step forms the interconnector so that it is connected to the fuel electrode layer; and
further comprising an electrolyte layer-forming step for forming the electrolyte layers of the multiple electricity generating elements on the fuel electrode layers;
wherein the dot deposition step is performed as an air electrode forming step for forming the air electrode layers in the multiple electricity generating elements by turning slurry used to form the air electrode layer into liquid droplet form, and continuously jetting it onto the electrolyte layer.

8. The method of manufacturing a solid oxide fuel cell of Claim 7, wherein the fuel electrode layer comprises a bottom fuel electrode layer formed on the porous support body, and a top fuel electrode layer formed on the bottom fuel electrode layer, and the viscosity of slurry used to form the bottom fuel electrode layer is higher than the viscosity of slurry used to form the top fuel electrode layer; and
the bottom fuel electrode layer is formed of a material with higher conductivity than the top fuel electrode layer, and the top fuel electrode layer is formed of a material with higher catalytic activity than the bottom fuel electrode layer.

9. The method of manufacturing a solid oxide fuel cell of Claim 8, wherein the air electrode layer comprises a bottom air electrode layer formed on the electrolyte layer, and a top air electrode layer formed on the bottom air electrode layer; and the viscosity of slurry used to form the bottom air electrode layer is lower than the viscosity of the slurry used to form the top air electrode layer; and
wherein the bottom air electrode layer is formed of a material with higher catalytic activity than the top air electrode layer, and the top air electrode layer is formed of a material with higher conductivity than the bottom air electrode layer.

10. The method of manufacturing a solid oxide fuel cell of Claim 1, wherein forming of the masking layer in the surface deposition step is performed by a first mask-forming step for forming a first masking layer by causing a mask-forming agent to adhere to the electrically insulating porous support body on parts where no film deposition is required;
the surface deposition step simultaneously forms the functional layers for the multiple electricity generating elements in parts where there is no first masking layer, by bringing the slurry used to form the first functional layer of the functional layers into contact with the porous support body on which the first masking layer is formed, from over the first masking layer;
the mask-forming agent adhered to the porous support body penetrates into the porous support body, and the formed masking layer has water repellent properties or oil repellent properties to repel slurry brought into contact therewith in the surface deposition step.

11. The method of manufacturing a solid oxide fuel cell of Claim 10, wherein, in the first masking-forming step, the mask-forming agent is applied only to predetermined positions where the first masking layer is to be formed by using a dispenser apparatus.

12. The method of manufacturing a solid oxide fuel cell of Claim 11, further comprising a first provisional sintering step for heating and curing the first functional layer formed in the surface deposition step, wherein the mask-forming agent is selected so that the first masking layer disappears in the first provisional sintering step.

13. The method of manufacturing a solid oxide fuel cell of Claim 12, wherein, the first mask-forming step is executed as a liquid application step for applying a liquid substance using the dispenser apparatus comprising a rotating roller and a nozzle linked to the rotating roller; and
wherein in the liquid application step, the dispenser apparatus continuously extrudes the liquid substance in a rod shape from a tip of the nozzle while keeping an approximately constant distance between the tip and the surface to which the liquid substance is to be applied.

14. The method of manufacturing a solid oxide fuel cell of Claim 13, wherein the dispenser apparatus applies the liquid substance to the top of the first functional layer while bringing the rotating roller in contact with the adjacent different first functional layer.

15. The method of manufacturing a solid oxide fuel cell of Claim 14, further comprising an interconnector-forming step wherein slurry for forming the interconnector is placed in liquid droplets state and continuously jetted to form slurry dots, and the interconnector layer is formed on the first functional layer by the agglomeration of the dots; wherein in the liquid application step the mask-forming agent is applied onto the interconnector layer formed in the interconnector-forming step to form the masking layer.

16. The method of manufacturing a solid oxide fuel cell of Claim 15, further comprising: a second surface deposition step for simultaneously forming the electrolyte layers for the multiple electricity generating elements in parts with no masking layer by bringing slurry for forming the electrolyte layer into contact from over the masking layer performed after the liquid application step, and a second provisional sintering step for heating and provisionally sintering the electrolyte layer, thereby causing the masking layer to disappear.

17. A dispenser apparatus used to form multiple electricity generating elements including a fuel electrode layer, an electrolyte layer, and an air electrode layer as functional layers, or an interconnector for connecting the electricity generating elements, on a porous support body of a solid oxide fuel cell, comprising:
a rotary support apparatus for supporting the porous support body so that it can be rotated;
a head portion including a nozzle for discharging a liquid substance used to form the functional layers or the interconnector toward a surface of the porous support body supported by the rotary support apparatus; and
a nozzle drive apparatus mounted on the head portion, for driving the nozzle so that the distance is maintained approximately constant between the surface, on which the liquid substance is to be applied, rotated by the rotary support apparatus, and a tip of the nozzle.

18. The dispenser apparatus of Claim 17, wherein the nozzle driving apparatus drives the nozzle in the direction along which the liquid substance is discharged, so that the distance is approximately constant between the tip of the nozzle and the surface to which the liquid substance is to be applied.

19. The dispenser apparatus of Claim 18, wherein the head portion makes the liquid substance discharged from the nozzle into a rod shape and continuously extrudes the liquid substance so that the space between the tip of the nozzle and the surface to which the liquid substance is to be applied is bridged by the liquid substance discharged from the tip.

20. The dispenser apparatus of Claim 19, wherein the head portion includes a tank for storing the liquid substance; the nozzle drive apparatus includes a rotating roller which is contacted with the surface rotated by the rotary support apparatus, to which liquid substance is to be applied, and wherein the nozzle is linked to the rotating roller to move together with the rotating roller so that the distance between the tip of the nozzle and the surface on which the liquid substance is to be applied is approximately constant, while the tank does not move together with the movement of the rotating roller.

21. The dispenser apparatus of Claim 20, wherein the head portion is constituted so as to be movable in the direction of the rotational center axis of the porous support body, and during the time when the head portion is moving along the rotational center axis to the position at which the liquid substance is to be applied, the rotating roller is spaced from the porous support body.

22. The dispenser apparatus of Claim 21, wherein the rotating roller is provided on only one side of the nozzle.

23. The dispenser apparatus of Claim 22, wherein the rotating roller is positioned so that a straight line connecting a contact point with the surface to which liquid substance is to be applied with the tip of the nozzle is approximately parallel to the rotational center axis of the porous support body.

24. The dispenser apparatus of Claim 23, wherein the rotating roller is positioned so that the straight line connecting the contact point with the surface to which liquid substance is to be applied with the tip of the nozzle is positioned approximately above the rotational center axis of the porous support body.

25. The dispenser apparatus of Claim 22, wherein the rotating roller is disposed so that a distance between the contact point with the surface to which liquid substance is to be applied and the tip of the nozzle is 10 mm or less.
